(19) Europäisches Patentamt
European Patent Office
Office européen des brevets

(11) **EP 4 258 798 A1**

(12) **EUROPEAN PATENT APPLICATION**
published in accordance with Art. 153(4) EPC

(43) Date of publication:
**11.10.2023 Bulletin 2023/41**

(21) Application number: **21919931.2**

(22) Date of filing: **23.12.2021**

(51) International Patent Classification (IPC):
**H04W 74/08** (2009.01)     **H04W 74/00** (2009.01)
**H04L 27/26** (2006.01)     **H04W 56/00** (2009.01)

(52) Cooperative Patent Classification (CPC):
**H04L 27/26; H04W 56/00; H04W 74/00;
H04W 74/08**

(86) International application number:
**PCT/KR2021/019733**

(87) International publication number:
**WO 2022/154307 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.01.2021 KR 20210005867**

(71) Applicant: **Samsung Electronics Co., Ltd.
Suwon-si, Gyeonggi-do 16677 (KR)**

(72) Inventors:
• **LEE, Seunghyun
  Suwon-si, Gyeonggi-do 16677 (KR)**

• **LEE, Hyojin
  Suwon-si, Gyeonggi-do 16677 (KR)**
• **LEE, Juho
  Suwon-si, Gyeonggi-do 16677 (KR)**
• **KIM, Hanjin
  Suwon-si, Gyeonggi-do 16677 (KR)**
• **PARK, Yosub
  Suwon-si, Gyeonggi-do 16677 (KR)**
• **CHOI, Sunghyun
  Suwon-si, Gyeonggi-do 16677 (KR)**

(74) Representative: **Nederlandsch Octrooibureau
P.O. Box 29720
2502 LS The Hague (NL)**

(54) **RANDOM ACCESS METHOD AND DEVICE IN ULTRA-HIGH FREQUENCY WIRELESS COMMUNICATION SYSTEM**

(57) The present disclosure relates to a 5G or 6G communication system for supporting a data transmission rate higher than that of a 4G system such as LTE. More particularly, disclosed are a method and a device related to the generation and detection of random access preamble signals for random access in ultra-high frequency wireless communication.

FIG. 8A

EP 4 258 798 A1

## Description

### [Technical Field]

The disclosure relates to a random access method and device in an ultra-high frequency wireless communication system.

### [Background Art]

A review of the development of wireless communication from generation to generation shows that the development has mostly been directed to technologies for services targeting humans, such as voice-based services, multimedia services, and data services. It is expected that connected devices which are exponentially increasing after commercialization of 5th generation (5G) communication systems will be connected to communication networks. Examples of things connected to networks may include vehicles, robots, drones, home appliances, displays, smart sensors connected to various infrastructures, construction machines, and factory equipment. Mobile devices are expected to evolve in various formfactors, such as augmented reality glasses, virtual reality headsets, and hologram devices. In order to provide various services by connecting hundreds of billions of devices and things in the 6G era, there have been ongoing efforts to develop improved 6G communication systems. For these reasons, 6G communication systems are referred to as beyond-5G systems.

6G communication systems, which are expected to be implemented approximately by 2030, will have a maximum transmission rate of tera (1,000 giga)-level bps and a radio latency of $100 \mu$sec, and thus will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a fullduplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a nextgeneration distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Particularly, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

Meanwhile, the UE may perform a random access procedure with the base station to obtain uplink synchronization for performing communication with the base station. For example, the UE may transmit a random access preamble generated in a predetermined sequence to the base station, and the base station may measure a round-trip delay (RTD) time with the UE through the random access preamble, and then transmit a timing advance (TA) value for adjusting a transmission time of an uplink signal of the UE based on the measured RTD to the UE through a random access response.

Here, a physical random access channel (PRACH) in a legacy LTE or NR is designed to be suitable for an environment in which a symbol length of a signal is much larger than a maximum RTD of a cell, but a wireless communication system in an ultra-high frequency band such as a terahertz band uses a large subcarrier spacing due to an influence of extreme phase noise and the like and thus may use a waveform having a very short symbol. In this case, there is a limitation to applying a PRACH preamble sequence design according to a legacy LTE or NR method.

[Disclosure of Invention]

[Technical Problem]

An aspect of the disclosure is to provide a method for generating and detecting a preamble sequence applicable to an ultra-high frequency band communication system.

[Solution to Problem]

To satisfy the aspect of the disclosure, a method of a user equipment (UE) in a wireless communication system according to an embodiment of the disclosure may include generating a preamble signal, transmitting, to a base station, the generated preamble signal, and receiving, from the base station, a random access response for a transmission of the preamble signal, wherein the preamble signal is generated based on a preconfigured number of first sequences and parts of a second sequence divided into the preconfigured number of equal portions.

Furthermore, a method of a base station in a wireless communication system according to an embodiment of the disclosure may include receiving, from a user equipment (UE), a preamble signal, generating a random access response for a reception of the preamble signal, and transmitting, to the UE, the random access response, wherein the preamble signal is generated based on a preconfigured number of first sequence and parts of a second sequence divided into the preconfigured number of equal portions.

Furthermore, a UE in a wireless communication system according to an embodiment of the disclosure may include a transceiver and a controller configured to generate a preamble signal, control the transceiver to transmit, to a base station, the generated preamble signal, and control the transceiver to receive, from the base station, a random access response for a transmission of the preamble signal, wherein the preamble signal is generated based on a preconfigured number of first sequences and parts of a second sequence divided into the preconfigured number of equal portions.

Furthermore, a base station in a wireless communication system according to an embodiment of the disclosure may include a transceiver and a controller configured to control the transceiver to receive, from a UE, a preamble signal, generate a random access response for a reception of the preamble signal, and control the transceiver to transmit, to the UE, the random access response, wherein the preamble signal is generated based on a preconfigured number of first sequence and parts of a second sequence divided into the preconfigured number of equal portions.

[Advantageous Effects of Invention]

According to an embodiment of the disclosure, a UE may generate a preamble signal by using two sequences in a system to which a short symbol length due to a high frequency band is applied, and perform a preamble detection operation by using a sequence configured to have a length shorter than a base station so as to cause an effect of increasing accuracy of RTD estimation and reducing complexity of detection.

[Brief Description of Drawings]

FIG. 1 is a diagram illustrating a basic structure of a time-frequency domain in LTE.
FIG. 2 is a diagram illustrating a downlink control channel of LTE.
FIG. 3 is a diagram illustrating a transmission resource of a downlink control channel in 5G.
FIG. 4 is a diagram illustrating an example of a configuration for a control region in 5G.
FIG. 5 is a diagram illustrating an example of a configuration for a downlink RB structure in 5G.
FIG. 6 is a diagram illustrating a basic structure of a PRACH preamble signal.
FIG. 7A is a flowchart illustrating an operation of a base station for transmitting and receiving a PRACH preamble signal.
FIG. 7B is a flowchart illustrating an operation of a UE for transmitting and receiving a PRACH preamble signal.
FIG. 8A is a diagram illustrating a structure of a PRACH preamble signal according to a first embodiment of the disclosure.

FIG. 8B is a flowchart illustrating an operation of a UE generating a PRACH preamble signal according to a first embodiment of the disclosure.

FIG. 9 is a diagram illustrating a method of transmitting a root index value of a spreading sequence through a physical broadcast channel (PBCH) according to an embodiment of the disclosure.

FIG. 10 is a diagram illustrating a method of transmitting a root index value of a spreading sequence through a master information block (MIB) according to an embodiment of the disclosure.

FIG. 11 is a diagram illustrating a method of transmitting a root index value of a spreading sequence through a system information block (SIB) according to an embodiment of the disclosure.

FIG. 12 is a diagram illustrating an example of a set of sequences that may be used as a masking sequence according to the disclosure.

FIG. 13 is a flowchart illustrating an operation in which a base station detects a PRACH preamble signal transmitted by a UE according to a first embodiment of the disclosure.

FIG. 14 is a diagram illustrating a detection window configured by a base station according to an embodiment of the disclosure. FIG. 15 is a diagram illustrating a correlation sequence used by a base station according to an embodiment of the disclosure.

FIG. 16A is a diagram illustrating a method for generating a PRACH preamble signal according to a second embodiment of the disclosure.

FIG. 16B is a flowchart illustrating an operation of a UE generating a PRACH preamble signal according to a second embodiment of the disclosure.

FIG. 17 is a flowchart illustrating an operation of a base station detecting a PRACH preamble signal generated according to a second embodiment of the disclosure.

FIG. 18 a block diagram illustrating an internal structure of a base station according to an embodiment of the disclosure.

FIG. 19 a block diagram illustrating an internal structure of a UE according to an embodiment of the disclosure.

**[Mode for the Invention]**

Hereinafter, embodiments of the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

A wireless communication system is advancing to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultramobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (UE) {or a mobile station (MS)} transmits data or control signals to a base station (BS) (eNode B), and the downlink indicates a radio link through which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultrareliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time, such as 10 to 15 years, because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and also requires a packet error rate of 10-5 or less. Therefore, for the services supporting URLLC, a 5G system must provide a transmit time interval (TTI) shorter than those of other services, and also requires a design for assigning a large number of resources in a frequency band in order to secure reliability of a communication link.

The three services in the 5G system, that is, eMBB, URLLC, and mMTC, may be multiplexed and transmitted in a single system. In this case, different transmission/reception techniques and transmission/reception parameters may be used between services in order to satisfy different requirements of the respective services. Of course, the 5G is not limited to the above-described three services.

Hereinafter, frame structures of LTE and LTE-A systems will be described in more detail with reference to the drawings.

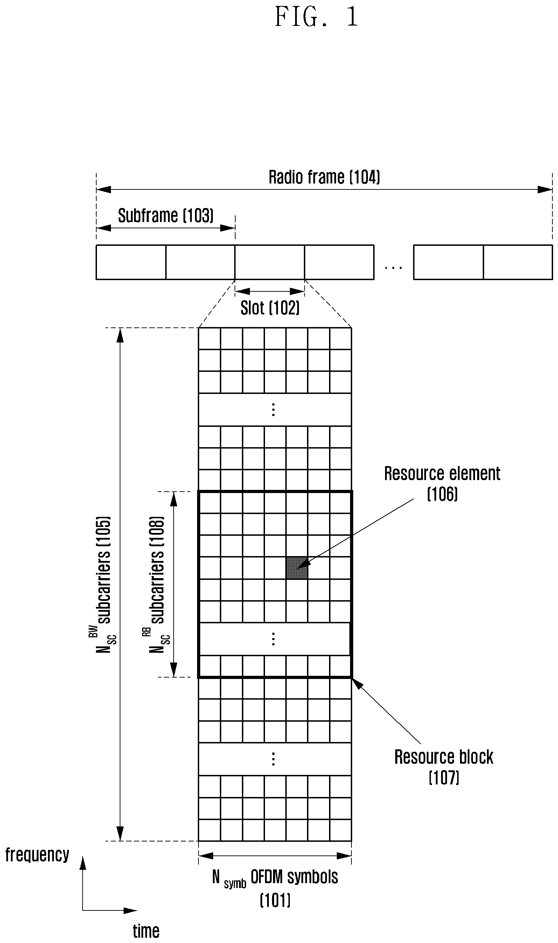

FIG. 1 is a diagram illustrating a basic structure of a time-frequency domain corresponding to a radio resource domain in which the data or control channel is transmitted in a system in LTE.

In FIG. 1, the horizontal axis represents a time domain, and the vertical axis represents a frequency domain. A minimum transmission unit in the time domain is an OFDM symbol, where $N_{symb}$ OFDM symbols 101 constitute one slot 102, and two slots constitute one subframe 103. The length of the slot is 0.5 ms, and the length of the subframe is 1.0 ms. The radio frame 104 is a time domain unit including 10 subframes. A minimum transmission unit in the frequency domain is a subcarrier, and a bandwidth of an entire system transmission bandwidth includes a total Naw subcarriers 105. A basic unit of a resource in the time-frequency domain is a resource element (RE) 106 and may be represented by an OFDM symbol index and a subcarrier index. A resource block (RB) (or physical resource block (PRB)) 107 is defined as N symb consecutive OFDM symbols 101 in the time domain and N RB consecutive subcarriers 108 in the frequency domain. Therefore, one RB 108 includes $N_{symb}$ x $N_{RB}$ REs 106. In general, a minimum transmission unit of data is the RB unit. In the LTE system, in general, $N_{symb}$=7, $N_{RB}$=12, and $N_{BW}$ and $N_{RB}$ are proportional to a bandwidth of a system transmission band.

Next, downlink control information (DCI) in LTE and LTE-A systems will be described in detail.

In the LTE system, scheduling information for downlink data or uplink data is transmitted from a base station to a UE through DCI.

DCI defines several formats and operate by applying a DCI format determined according to

whether it is scheduling information for uplink data or scheduling information for downlink data,
whether it is a compact DCI with a small size of control information,
whether to apply spatial multiplexing using multi-antenna,
whether it is DCI for power control.

For example, DCI format 1, which is scheduling control information for downlink data, is configured to include at least the following control information.

- Resource allocation type 0/1 flag: Resource allocation type 0/1 flag notifies whether a resource allocation scheme is type 0 or type 1.

Type 0 flag allocates resources on a resource block group (RBG) unit by applying a bitmap scheme. In the LTE system, a basic scheduling unit is a resource block (RB) expressed as time and frequency domain resources, and the RBG includes multiple RBs and becomes the basic scheduling unit for type 0.

Type 1 flag allocates a specific RB in the RBG.

- Resource block assignment: Resource block assignment notifies of an RB assigned for data transmission. A resource to be represented is determined according to a system bandwidth and a resource allocation scheme.
- Modulation and coding scheme (MCS): Modulation and coding scheme indicates a modulation scheme used for data transmission and a size of a transport block which is data desired to be transmitted.
- HARQ process number: HARQ process number indicates the HARQ process number.
- New data indicator: A new data indicator notifies whether transmission is HARQ initial transmission or retransmission.
- Redundancy version: A redundancy version indicates a redundancy version of HARQ.
- Transmit power control (TPC) command for physical uplink control channel (PUCCH): A TPC command for PUCCH notifies a transmit power control command for PUCCH, which is an uplink control channel.

DCI is channel-coded, modulated, and then transmitted via a physical downlink control channel (PDCCH) which is a downlink physical control channel.

A cyclic redundancy check (CRC) is attached to a DCI message payload, and the CRC is scrambled by a radio network temporary identifier (RNTI) corresponding to the identity of the UE.

Different types of RNTIs are used according to the purpose of a DCI message, for example, UE-specific data transmission, a power control command, a random access response, or the like. That is, an RNTI is not explicitly transmitted, and is transmitted after being included in a CRC calculation process. If the UE has received a DCI message transmitted on a PDCCH, the UE may identify a CRC by using an allocated RNTI, and if a CRC identification result is correct, the UE may identify that the message has been transmitted to the UE.

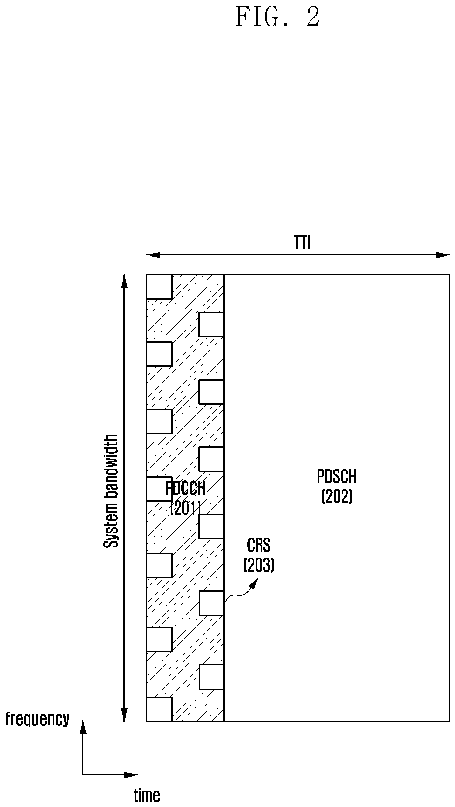

FIG. 2 is a diagram illustrating a PDCCH 201 corresponding to a downlink physical channel through which DCI of LTE is transmitted.

According to FIG. 2, the PDCCH 201 is time-multiplexed with a PDSCH 202, which is a data transmission channel, and is transmitted over the entire system bandwidth. A region of the PDCCH 201 is expressed by the number of OFDM symbols, which is indicated to the UE by a control format indicator (CFI) transmitted through a physical control format indicator channel (PCFICH).

By allocating the PDCCH 201 to an OFDM symbol that comes at a first part of a subframe, the UE may decode downlink scheduling allocation as soon as possible, and through this, there is an advantage in that the decoding delay for the downlink shared channel (DL-SCH), that is, the overall downlink transmission delay may be reduced. Since one PDCCH carries one DCI message, and multiple UEs may be simultaneously scheduled for downlink and uplink, multiple PDCCHs are transmitted simultaneously in each cell.

A cell-specific reference signal (CRS) 203 is used as a reference signal for decoding the PDCCH 201. The CRS 203 is transmitted in every subframe over the entire band, and scrambling and resource mapping are changed according to a cell identity (ID).

Since the CRS 203 is a reference signal commonly used by all UEs, UE-specific beamforming may not be used. Therefore, a multi-antenna transmission scheme for a PDCCH in LTE is limited to open loop transmit diversity. The number of ports of a CRS is implicitly known to a UE through decoding of a physical broadcast channel (PBCH).

The resource allocation for the PDCCH 201 is based on a control-channel element (CCE), and one CCE includes 9 resource element groups (REGs), i.e., a total of 36 resource elements (REs). The number of CCEs required for a specific PDCCH 201 may be 1, 2, 4, or 8, and the number varies based on the channel coding rate of a DCI message payload.

As described above, the different values of the number of CCEs may be used for implementing a link adaptation of the PDCCH 201. The UE needs to detect a signal while not knowing of the information on the PDCCH 201, wherein a search space representing a set of CCEs is defined for blind decoding in LTE.

The search space includes multiple sets based on aggregation levels (ALs) of CCEs, and the AL is not explicitly signaled but is defined implicitly through a subframe number and a function by a UE identity.

In each subframe, the UE performs decoding of the PDCCH 201 with respect to all possible resource candidates, which are made from the CCEs in the configured search space, and processes information that has been indicated to the UE as valid information through identifying CRC.

The search space is classified into a UE-specific search space and a common search space. A certain group of UEs or all UEs may monitor a common search space of the PDCCH 201 in order to receive cell-common control information, such as a paging message or dynamic scheduling for system information. For example, DL-scheduling allocation information for transmission of system information block (SIB)-1 including, for example, cell operator information, and the like may be received by monitoring the common search space of the PDCCH 201.

An entire PDCCH region in LTE includes a set of CCEs in a logical region, and includes a search space including a set of CCEs. The search space is separated into a common search space and a UE-specific search space, and the search space for an LTE PDCCH is defined as follows.

---

The set of PDCCH candidates to monitor are defined in terms of search spaces, where a search space $S_k^{(L)}$ at aggregation level $L \in \{1,2,4,8\}$ is defined by a set of PDCCH candidates. For each serving cell on which PDCCH is monitored, the CCEs corresponding to PDCCH candidate $m$ of the search space $S_k^{(L)}$ are given by

$$L\left\{(Y_k + m')\bmod \lfloor N_{\mathrm{CCE},k}/L \rfloor\right\} + i$$

where $Y_k$ is defined below, $i = 0, ..., L\text{-}1$. For the common search space $m' = m$. For the PDCCH UE specific search space, for the serving cell on which PDCCH is monitored, if the monitoring UE is configured with carrier indicator field then $m' = m + M^{(L)} \cdot n_{CI}$ where $n_{CI}$ is the carrier indicator field value, else if the monitoring UE is not configured with carrier indicator field then $m' = m$, where $m = 0, \cdots, M^{(L)}\text{-}1$. $M^{(L)}$ is the number of PDCCH candidates to monitor in the given search space.

Note that the carrier indicator field value is the same as *ServCellIndex*

For the common search spaces, $Y_k$ is set to 0 for the two aggregation levels $L = 4$ and $L = 8$.

For the UE-specific search space $S_k^{(L)}$ at aggregation level $L$, the variable $Y_k$ is defined by

$Y_k = (A \cdot Y_{k\text{-}1}) \bmod D$

where $Y_{-1} = n_{\mathrm{RNTI}} \neq 0$, $A = 39827$, $D = 65537$ and $k = \lfloor n_s/2 \rfloor$, $n_s$ is the slot number within a radio frame.

The RNTI value used for $n_{\mathrm{RNTI}}$ is defined in subclause 7.1 in downlink and subclause 8 in uplink.

---

According to the definition of the search space for the PDCCH described above, the UE-specific search space is not explicitly signaled but is implicitly defined through a function and a subframe number by the UE identity.

That is, a UE-specific search space may vary based on a subframe number, i.e., over time, thereby solving a problem that a specific UE may not use the search space by other UEs among UEs (blocking problem).

If a specific UE is not scheduled in the corresponding subframe because all CCEs that are examined by the corresponding UE are already used by other UEs scheduled in the same subframe, such a problem may not occur in the next subframe since this search space changes over time. For example, even if parts of the UE-specific search spaces of UE #1 and UE #2 overlap each other in a specific subframe, overlapping in the next subframe may be expected to be different from the aboveoverlapping because the UE-specific search space changes for each subframe.

According to the definition of the search space for the PDCCH described above, in the case of the common search space, a predetermined group of UEs or all UEs have to receive the PDCCH, and thus, the search space is defined as a set of previously promised CCEs. In other words, the common search space does not change depending on the identity of the UE or the subframe number.

Although the common search space exists for the transmission of various system messages, the common search space may also be used to transmit control information of individual UEs. Through this, the common search space may be used as a solution to a phenomenon that the UE is not scheduled due to a lack of available resources of the UE-specific search space.

The search space is a set of candidate channels including CCEs, for which the UE needs to attempt decoding on a given aggregation level, and since there are various aggregation levels that make one bundle with 1, 2, 4, or 8 CCEs, the UE has multiple search spaces.

The number of PDCCH candidates to be monitored by a UE within the search space defined according to the aggregation level in the LTE PDCCH is defined in the following table.

[Table 1]

| Search space $S_k^{(L)}$ | | | Number of PDCCH candidates $M^{(L)}$ |
|---|---|---|---|
| Type | Aggregation level $L$ | Size [in CCEs] | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

According to [Table 1], the UE-specific search space supports aggregation levels {1, 2, 4, 8}, and in this case, the UE-specific search space has {6, 6, 2, 2}-numbered PDCCH candidate groups for each aggregation level. The common search space 302 supports aggregation levels {4, 8}, and in this case, the common search space has {4, 2}-numbered PDCCH candidate groups for each aggregation level.

The reason why the common search space supports only the aggregation levels of {4, 8} is to improve the coverage characteristics of the system message because the system message generally has to reach a cell edge.

DCI transmitted to the common search space is defined for a DCI format, such as 0/1A/3/3A/1C, which corresponds to a purpose of power control of a UE group or a system message.

Within the common search space, a DCI format having spatial multiplexing is not supported.

A downlink DCI format of DCI to be decoded in the UE-specific search space varies depending on a transmission mode configured for the corresponding UE. Since the configuration of the transmission mode is performed through RRC signaling, an accurate subframe number where the corresponding configuration is effective for the corresponding UE is not designated. Therefore, the UE always performs decoding with respect to DCI format 1A, regardless of a transmission mode, so as not to lose communication.

In the above, a method and a search space for transmitting and receiving a downlink control channel and downlink control information in the conventional LTE and LTE-A systems have been described.

The downlink control channel in the 5G communication system currently being discussed will be described below in more detail with reference to the drawings.

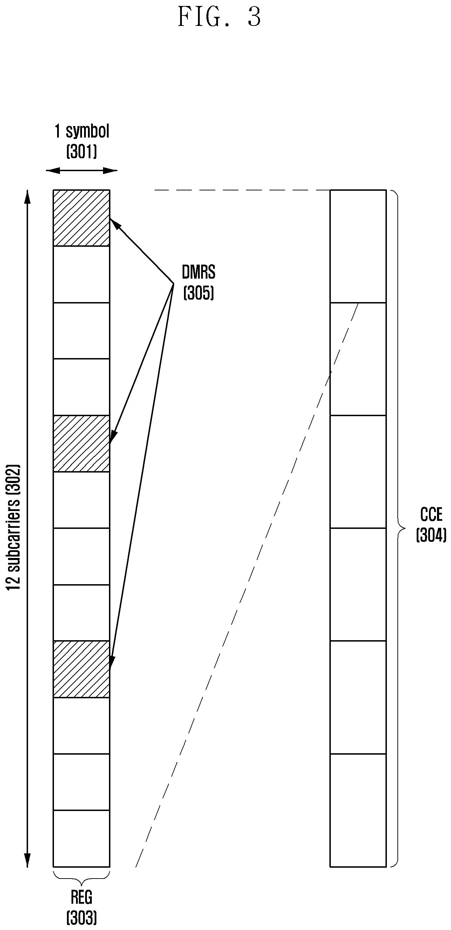

FIG. 3 is a diagram illustrating an example of a basic unit of time-and-frequency resources constituting a downlink control channel that may be used in the 5G. According to FIG. 3, the basic unit (REG) of the time-and-frequency resources constituting the control channel is composed of 1 OFDM symbol 301 on the time axis and 12 subcarriers 302 that is, 1 RB on the frequency axis.

By assuming that a time axis-basic unit is 1 OFDM symbol 301 in configuring the basic unit of the control channel, the data channel and the control channel may be time-multiplexed within one subframe.

By locating the control channel before the data channel, a user's processing time may be reduced, whereby a latency requirement may be easily satisfied.

By configuring the 1 RB 302 as a basic unit in the frequency axis of the control channel, frequency multiplexing between the control channel and the data channel may be efficiently performed.

By concatenating the REGs 303 shown in FIG. 3, control channel regions having various sizes may be configured. By way of example, if the basic unit in which the downlink control channel is allocated in the 5G system is a CCE 304, 1 CCE 304 may include multiple REGs 303.

Taking the REG 304 illustrated in FIG. 3 as an example, the REG 303 may include 12 REs and, when 1 CCE 304 includes 6 REGs 303, 1 CCE 304 may include 72 REs.

In case that a downlink control region is configured, the corresponding region may include multiple CCEs 304, and a specific downlink control channel may be mapped to one or multiple CCEs 304 according to an aggregation level (AL) within the control region and then transmitted.

CCEs 304 within the control region may be distinguished by numbers and the numbers may be assigned according to a logical mapping scheme.

The basic unit of a downlink control channel shown in FIG. 3, that is, the REG 303 may include both REs to which DCI is mapped and a region to which a demodulation reference signal (DMRS) 305 corresponding to a reference signal for decoding the REs is mapped.

As shown in FIG. 3, DMRSs 305 may be transmitted in 6 REs within 1 REG 303. For reference, since the DMRS 303 is transmitted by using the same precoding as the control signal to be mapped within the REG 303, the UE may decode control information even without information on which precoding has been applied by the base station.

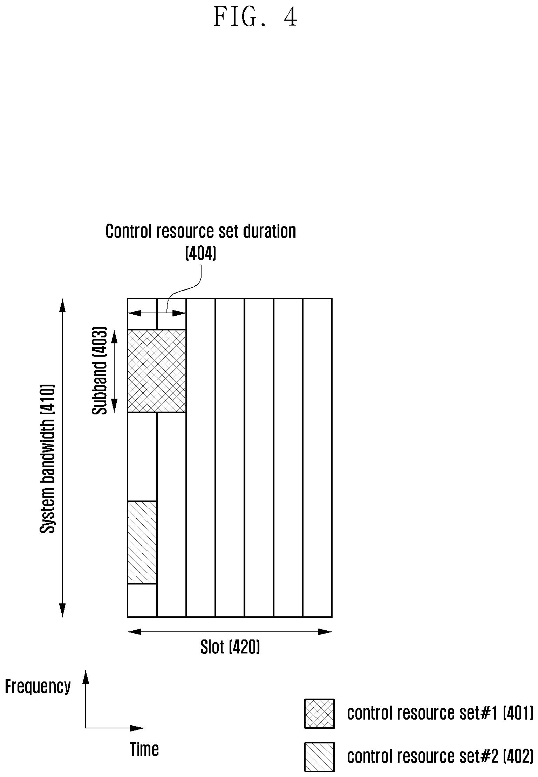

FIG. 4 is a view illustrating an example of a configuration of a control region (control resource set (CORESET)) through which a downlink control channel is transmitted in the 5G system. FIG. 4 illustrates an example in which two control regions (control region #1 401 and control region #2 402) are configured in one slot 420 on the time axis (in the example of FIG. 4, it is assumed that 1 slot includes 7 OFDM symbols) while the system bandwidth 410 is configured on the frequency axis. The control regions 401 and 402 on the frequency axis may be configured as a specific subband 403 in the entire system bandwidth 410. The control region may be configured as one or multiple OFDM symbols in the time axis, which may be defined as a control region duration (control resource set duration) 404. In the example illustrated in FIG. 4, control region #1 401 is configured as a control region duration of 2 symbols, and control region #2 402 is configured as a control region duration of 1 symbol.

The aforementioned control region in 5G may be configured in the UE by the base station via higher layer signaling (e.g., system information, a master information block (MIB), and RRC signaling).

Configuring a control region in a UE includes providing the UE with information such as the location of the control region, subband, resource allocation of the control region, and control resource set duration. For example, the following information may be included.

[Table 2]

| |
|---|
| - configuration information 1. frequency-axis RB allocation information |
| - configuration information 2. control region start symbol |
| - configuration information 3. control resource set duration |
| - configuration information 4. REG bundling size (2, 3 or 6) |
| - configuration information 5. transmission mode (interleaved transmission scheme or non-interleaved transmission scheme) |
| - configuration information 6. DMRS configuration information (precoder granularity) |
| - configuration information 7. search space type (common search space, groupcommon search space, or UE-specific search space) |
| - configuration information 8. DCI format to be monitored in the corresponding control region |
| - other information |

In addition to the aforementioned configuration information, other various pieces of information necessary for transmitting the downlink control channel may be configured in the UE.

Next, downlink control information (DCI) in the 5G will be described in detail.

In the 5G system, scheduling information on uplink data (a physical uplink shared channel (PUSCH)) or downlink data (a physical downlink shared channel (PDSCH)) is transferred through DCI from a base station to a UE.

The UE may monitor a fallback DCI format and a non-fallback DCI format for the PUSCH or the PDSCH.

The fallback DCI format may be configured with a fixed field between the base station and the UE, and the non-fallback DCI format may include a configurable field.

The fallback DCI for PUSCH scheduling may include the following information.

[Table 3]

| |
|---|
| - Identifier for DCI formats - [1] bit |
| - Frequency domain resource assignment $-[\lceil \log_2(N_{RB}^{UL,BWP}(N_{RB}^{UL,BWP}+1)/2) \rceil]$ bits |
| - Time domain resource assignment - X bits |
| - Frequency hopping flag - 1 bit. |
| - Modulation and coding scheme - [5] bits |
| - New data indicator - 1 bit |
| - Redundancy version - [2] bits |
| - HARQ process number - [4] bits |
| - TPC command for scheduled PUSCH - [2] bits |
| - UL/SUL indicator - 0 or 1 bit |

The non-fallback DCI for PUSCH scheduling may include the following information.

[Table 4]

- Carrier indicator - 0 or 3 bits
- Identifier for DCI formats - [1] bits
- Bandwidth part indicator - 0, 1 or 2 bits
- Frequency domain resource assignment

    • For resource allocation type 0, $\left\lceil N_{\text{RB}}^{\text{UL,BWP}}/P \right\rceil$ bits

    • For resource allocation type 1, $\left\lceil \log_2(N_{\text{RB}}^{\text{UL,BWP}}(N_{\text{RB}}^{\text{UL,BWP}}+1)/2) \right\rceil$ bits

- Time domain resource assignment -1, 2, 3, or 4 bits
- VRB-to-PRB mapping - 0 or 1 bit, only for resource allocation type 1.
    • 0 bit if only resource allocation type 0 is configured;
    • 1 bit otherwise.
- Frequency hopping flag - 0 or 1 bit, only for resource allocation type 1.
    • 0 bit if only resource allocation type 0 is configured;
    • 1 bit otherwise.
- Modulation and coding scheme - 5 bits
- New data indicator - 1 bit
- Redundancy version - 2 bits as defined in section x.x of [6, TS38.214]
- HARQ process number - 4 bits
- 1st downlink assignment index - 1 or 2 bits
    • 1 bit for semi-static HARQ-ACK codebook;
    • 2 bits for dynamic HARQ-ACK codebook with single HARQ-ACK codebook.
- 2nd downlink assignment index - 0 or 2 bits
    • 2 bits for dynamic HARQ-ACK codebook with two

HARQ-ACK sub-codebooks;
    • 0 bit otherwise.
- TPC command for scheduled PUSCH - 2 bits

- SRS resource indicator - $\left\lceil \log_2\left( \sum_{k=1}^{L_{\max}} \binom{N_{\text{SRS}}}{k} \right) \right\rceil$ or $\left\lceil \log_2(N_{\text{SRS}}) \right\rceil$ bits

    • $\left\lceil \log_2\left( \sum_{k=1}^{L_{\max}} \binom{N_{\text{SRS}}}{k} \right) \right\rceil$ bits for non-codebook based PUSCH transmission;

    • $\left\lceil \log_2(N_{\text{SRS}}) \right\rceil$ bits for codebook based PUSCH transmission.
- Precoding information and number of layers -up to 6 bits
- Antenna ports - up to 5 bits
- SRS request - 2 bits
- CSI request - 0, 1, 2, 3, 4, 5, or 6 bits
- CBG transmission information - 0, 2, 4, 6, or 8 bits
- PTRS-DMRS association - 2 bits.
- beta_offset indicator - 2 bits
- DMRS sequence initialization - 0 or 1 bit
- UL/SUL indicator - 0 or 1 bit

The fallback DCI for PDSCH scheduling may include the following information.

[Table 5]

| |
|---|
| - Identifier for DCI formats - [1] bit<br><br>- Frequency domain resource assignment $-\left[\left\lceil \log_2(N_{RB}^{DL,BWP}(N_{RB}^{DL,BWP}+1)/2)\right\rceil\right]$ bits<br>- Time domain resource assignment - X bits<br>- VRB-to-PRB mapping - 1 bit.<br>- Modulation and coding scheme - [5] bits |
| - New data indicator - 1 bit<br>- Redundancy version - [2] bits<br>- HARQ process number - [4] bits<br>- Downlink assignment index - 2 bits<br>- TPC command for scheduled PUCCH - [2] bits<br>- PUCCH resource indicator - [2] bits<br>- PDSCH-to-HARQ feedback timing indicator - [3] bits |

The non-fallback DCI for PDSCH scheduling may include the following information.

[Table 6]

| |
|---|
| - Carrier indicator - 0 or 3 bits<br>- Identifier for DCI formats - [1] bits<br>- Bandwidth part indicator - 0, 1 or 2 bits<br>- Frequency domain resource assignment<br><br>    • For resource allocation type 0, $\left\lceil N_{RB}^{DL,BWP}/P\right\rceil$ bits<br>    • For resource allocation type 1, $\left\lceil \log_2(N_{RB}^{DL,BWP}(N_{RB}^{DL,BWP}+1)/2)\right\rceil$ bits<br><br>- Time domain resource assignment -1, 2, 3, or 4 bits<br>- VRB-to-PRB mapping - 0 or 1 bit, only for resource allocation type 1.<br>    • 0 bit if only resource allocation type 0 is configured;<br>    • 1 bit otherwise.<br>- PRB bundling size indicator - 1 bit<br>- Rate matching indicator - 0, 1, 2 bits<br>- ZP CSI-RS trigger - X bits<br>For transport block 1:<br>- Modulation and coding scheme - 5 bits<br>- New data indicator - 1 bit<br>- Redundancy version - 2 bits<br>For transport block 2: |
| - Modulation and coding scheme - 5 bits<br>- New data indicator - 1 bit<br>- Redundancy version - 2 bits<br>- HARQ process number - 4 bits<br>- Downlink assignment index - 0 or 4 bits<br>- TPC command for scheduled PUCCH - 2 bits<br>- PUCCH resource indicator<br>- PDSCH-to-HARQ_feedback timing indicator - 3 bits<br>- Antenna ports - up to 5 bits |

(continued)

> - Transmission configuration indication - 3 bits
>
> - SRS request - 2 bits
>
> - CBG transmission information - 0, 2, 4, 6, or 8 bits
>
> - CBG flushing out information - 0 or 1 bit
>
> - DMRS sequence initialization - 0 or 1 bit

The DCI may be channel-coded, modulated, and then transmitted via a physical downlink control channel (PDCCH) which is a downlink physical control channel.

A cyclic redundancy check (CRC) is attached to a DCI message payload, and the CRC is scrambled by a radio network temporary identifier (RNTI) corresponding to the identity of the UE.

Different types of RNTIs are used according to the purpose of a DCI message, for example, UE-specific data transmission, a power control command, a random access response, or the like. In addition, an RNTI is not explicitly transmitted, and is included in a CRC calculation process before transmission.

If the UE has received a DCI message transmitted on a PDCCH, the UE may identify a CRC by using an allocated RNTI, and if a CRC identification result is correct, the UE may identify that the message has been transmitted to the UE.

For example, DCI for scheduling the PDSCH for system information (SI) may be scrambled by an SI-RNTI.

DCI scheduling the PDSCH for a random access response (RAR) message may be scrambled by an RA-RNTI.

DCI scheduling the PDSCH for a paging message may be scrambled by a P-RNTI.

DCI notifying of a slot format indicator (SFI) may be scrambled by an SFI-RNTI.

DCI notifying of a transmit power control (TPC) may be scrambled by a TPC-RNTI.

DCI scheduling a UE-specific PDSCH or PUSCH may be scrambled by a cell RNTI (C-RNTI).

If a specific UE receives a data channel, that is, PUSCH or PDSCH, scheduled through the PDCCH, data is transmitted/received along with DMRS in the scheduled resource region.

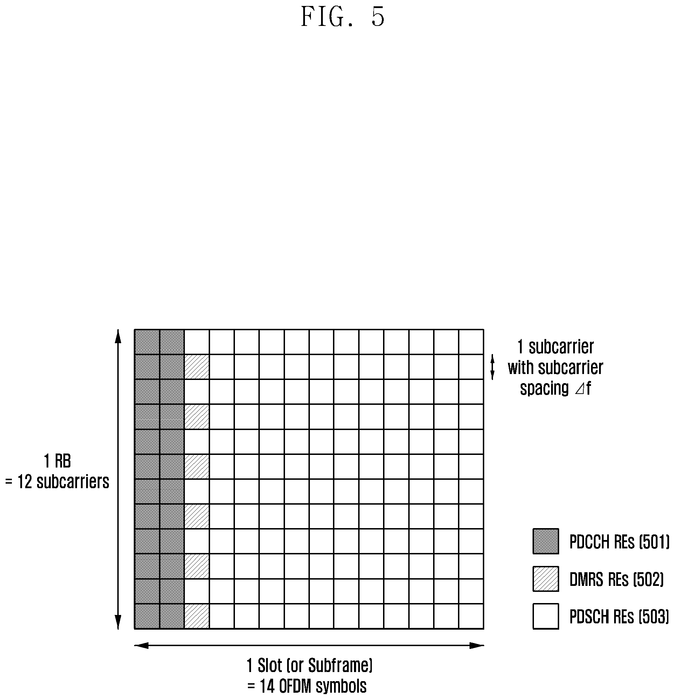

FIG. 5 illustrates a case in which a specific UE uses 14 OFDM symbols as one slot (or subframe) in downlink, the PDCCH is transmitted in the first two OFDM symbols, and the DMRS is transmitted in the third symbol.

In the case of FIG. 5, in a specific RB where the PDSCH is scheduled, the PDSCH is transmitted, with data mapped to the REs, in which no DMRS is transmitted in the third symbol, and the REs of the fourth to the last symbols.

Subcarrier spacing $\Delta f$ represented in FIG. 5 uses 15 kHz in the LTE/LTE-A system and one of {15, 30, 60, 120, 240, 480} kHz in the 5G system.

In the cellular system as described above, the base station should transmit a reference signal to measure the downlink channel state. In the 3GPP LTE-A system, the UE may measure the channel state between the UE and the base station by using the CRS or CSI-RS transmitted by the base station.

The channel state should be measured considering various factors, and a downlink interference amount may be included therein.

The downlink interference amount includes an interference signal and thermal noise that are generated by an antenna belonging to a neighbor base station, and the downlink interference amount is critical for the UE to determine a channel situation of downlink.

By way of example, in case that a base station with one transmission antenna transmits a signal to a UE with one reception antenna, the UE should determine an amount of interference to be received simultaneously during the period of receiving corresponding symbols and energy per symbol that may be received on downlink from the reference signal received from the base station so as to determine Es/Io.

The determined Es/Io is converted into a data transmission speed or a value corresponding to the data transmission speed and is transmitted, in the form of a channel quality indicator (CQI), to the base station and may be used to determine at what data transmission speed the base station performs transmission to the UE.

In the LTE-A system, the UE feeds back information on the channel state of downlink to the base station so as to be utilized for downlink scheduling by the base station. That is, the UE measures the reference signal transmitted by the base station on downlink and feeds back the information extracted therefrom to the base station in a form as defined in the LTE/LTE-A standards. As described above, the information fed back by the UE in LTE/LTE-A may be referred to as channel state information, and the channel state information may include three pieces of information as follows.

Rank indicator (RI): the number of spatial layers that may be received by the UE in the current channel state

Precoder matrix indicator (PMI): an indicator for a precoding matrix preferred by the UE in the current channel state

Channel quality indicator (CQI): the maximum data rate at which the UE may perform reception in the current channel state

The CQI may be replaced with the signal-to-interference plus noise ratio (SINR), the maximum error correction code rate and modulation scheme, or data efficiency per frequency which may be utilized similar to the maximum data rate.

The RI, PMI, and CQI have meanings in association with one another. By way of example, the precoding matrix supported in LTE/LTE-A is differently defined by ranks. Accordingly, the PMI value X when the RI has a value of 1 and the PMI value X when the RI has a value of 2 may be interpreted differently. Further, it is assumed that when the UE determines the CQI, the PMI value and X having been notified to the base station has also been applied to the base station. That is, reporting RI_X, PMI_Y, and CQI Z to the base station by the UE is equivalent to reporting that the UE may receive the data rate corresponding to CQI Z when the rank is RI_X, and PMI is PMI_Y. As such, when calculating the CQI, the UE assumes a transmission scheme to be performed for the base station, thereby enabling to secure the optimized performance when performing actual transmission using the corresponding transmission scheme.

In LTE/LTE-A, RI, PMI, and CQI, which are channel state information fed back by the UE, may be fed back periodically or aperiodically. When the base station is to aperiodically obtain channel state information of a specific UE, the base station may be configured to perform aperiodic feedback (or aperiodic channel state information) using an aperiodic feedback indicator (or channel state information request field or channel state information request information) included downlink control information (DCI) about the UE. Further, if receiving an indicator configured to perform aperiodic feedback in the n-th subframe, the UE may perform uplink transmission by including aperiodic feedback information (or channel state information) in data transmission in the n+k-th subframe. Here, k is a parameter defined in the 3GPP LTE release 11 standards, and k is 4 for frequency division duplexing (FDD) and may be defined as shown below in [Table 7]

[Table 7]

| TDD UL/DL Configuration | subframe number *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | 7 | 4 | - | - | 6 | 7 | 4 |
| 1 | - | - | 6 | 4 | - | - | - | 6 | 4 | - |
| 2 | - | - | 4 | - | - | - | - | 4 | - | - |
| 3 | - | - | 4 | 4 | 4 | - | - | - | - | - |
| 4 | - | - | 4 | 4 | - | - | - | - | - | - |
| 5 | - | - | 4 | - | - | - | - | - | - | - |
| 6 | - | - | 7 | 7 | 5 | - | - | 7 | 7 | - |

Values of k for subframe number n in TDD UL/DL configuration

When aperiodic feedback is configured, feedback information (or channel state information) may include RI, PMI, and CQI, and RI and PMI may not be fed back depending on the feedback configuration (or channel state report configuration).

Hereinafter, an embodiment of the disclosure will be described in detail with reference to the accompanying drawings. Hereinafter, an embodiment of the disclosure will be described using the LTE or LTE-A system as an example, but the embodiment of the disclosure may be applied to other communication systems having a similar technical background or channel type. For example, the 5th generation mobile communication technology (5G, new radio (NR)) or 6th generation mobile communication technology that is developed after LTE-A may be included therein. Accordingly, the embodiments of the disclosure may be applied to other communication systems through some modifications without significantly departing from the scope of the disclosure as determination made by a person skilled in the art.

A physical random access channel (PRACH) in the legacy LTE or NR is designed to be suitable for an environment having a symbol length of a signal is much longer than a maximum round-trip delay of a cell. The base station may perform a preamble sequence reception operation using this to concurrently distinguish each UE and estimate preamble signal delay. On the other hand, a wireless communication system in an ultra-high frequency band such as a terahertz band may use a waveform having a very large subcarrier spacing, that is, a very small symbol length, due to an influence of extreme phase noise, or the like. Accordingly, it is impossible to use a PRACH preamble sequence design, which is a simple extension of an existing LTE or NR method, in a mobile communication system of an ultra-high frequency band.

Therefore, the disclosure proposes a new PRACH preamble signal design suitable for an ultra-high frequency band including a terahertz frequency domain and a transmission/reception operation technology thereof. The disclosure includes a method of a UE for generating and transmitting a PRACH preamble sequence for random access, a method of a base station for receiving the PRACH preamble sequence and estimating a round-trip delay of a signal for timing-advance feedback, and a method for detecting of an ID of the preamble generated by the UE. Through the proposed technology, the base station may concurrently distinguish each UE and estimate the round-trip delay of the preamble signal even in an environment where a length of the signal preamble is very short compared to a maximum round-trip delay of a cell.

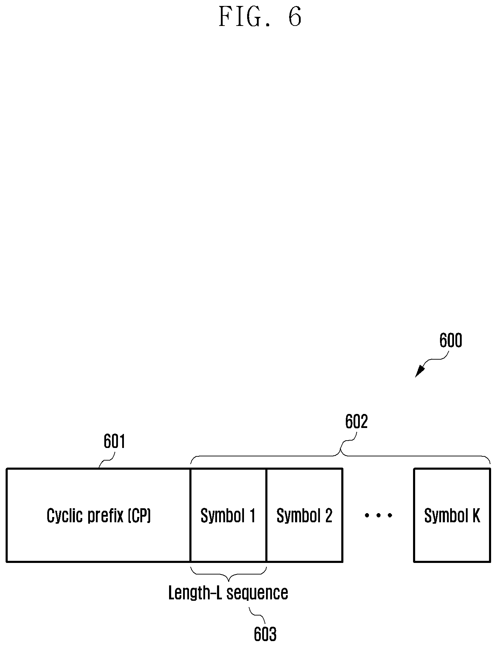

FIG. 6 is a diagram illustrating a basic structure of a PRACH preamble signal transmitted by a UE.

Referring to FIG. 6, the PRACH preamble signal 600 may include a main signal part 602 including K OFDM symbols and a cyclic prefix (CP) 601. In each symbol, a sequence 603 having a length of L may be arranged. A length of the CP 601 may be configured, for example, as a value greater than or equal to a maximum round-trip delay of a normal cell, and a signal obtained by copying a rear part of the main signal part 602 signal may be used. Hereinafter, for convenience of description, a portion of the PRACH preamble signal excluding the CP will be referred to as a main signal part 602.

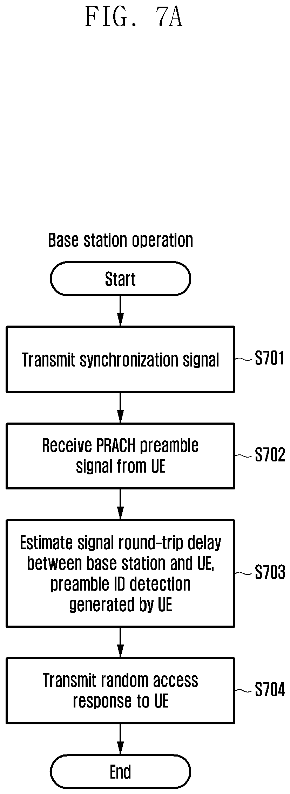

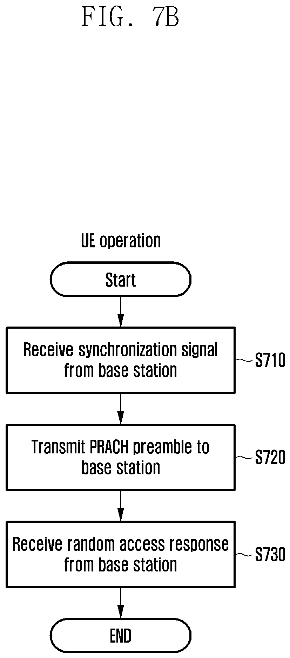

FIG. 7A is a flowchart illustrating an operation of a base station for transmitting and receiving a PRACH preamble signal and FIG. 7B is a flowchart illustrating an operation of a UE for transmitting and receiving a PRACH preamble signal.

First, referring to FIG. 7A, the base station according to an embodiment of the disclosure may transmit a synchronization signal to multiple UEs (S701). Here, the synchronization signal may include, for example, a primary synchronization signal (PSS), a secondary synchronization signal (SSS), and a physical broadcast channel (PBCH).

The base station may receive a random access preamble signal from a UE through a PRACH resource (S702). As such, when the random access preamble signal is received, the base station may identify an identifier (ID) for the UE based on the random access preamble signal, and determine a timing adjustment value for the UE through estimation of a round-trip delay (RTD) between the base station and the UE (S703).

The base station may transmit a random access response including the determined timing adjustment value (timing advance) to the identified UE (S704).

As shown in FIG. 7B, when receiving the synchronization signal transmitted by the base station (S710), the UE may align downlink synchronization accordingly and transmit a random access preamble to the base station through the PRACH resource (S720).

Thereafter, when a random access response is received from the base station in response to transmitting the random access preamble (S730), the timing advance value included in the random access response is applied, and a message for access may be transmitted to the base station according to an uplink grant included in the random access response.

<First embodiment>

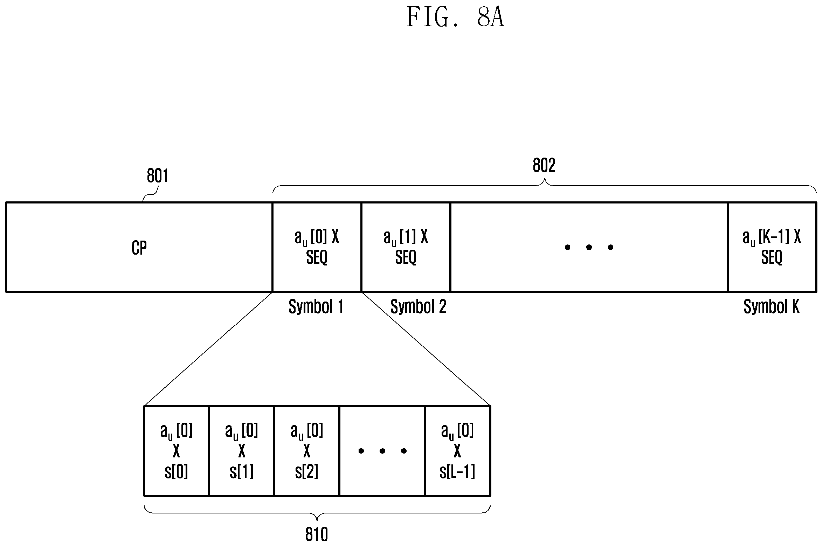

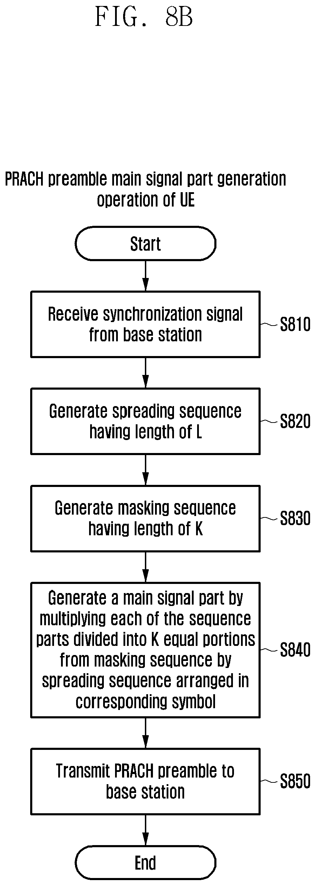

FIG. 8A is a diagram illustrating a structure of a PRACH preamble signal according to a first embodiment of the disclosure and FIG. 8B is a flowchart illustrating an operation of a UE generating a PRACH preamble signal according to a first embodiment of the disclosure.

First, referring to FIG. 8A, the PRACH preamble signal according to the first embodiment of the disclosure may include a CP 801 and a main signal part 802 including K symbols 810.

Here, a length of the CP 801 may be configured, for example, as a value greater than or equal to a maximum round-trip delay of a normal cell, and a signal obtained by copying a rear part of the main signal part 802 signal may be used.

Here, in each of the K symbols included in the main signal part 802, a SEQ $s[0], s[1], ..., s[L-1]$ that is a sequence (spreading sequence) having a length of L may be arranged, a masking sequence $a_u[0], a_u[1], ..., a_u[K-1]$ having a length of K may be divided into K sequence parts, and each of the K sequence parts $a_u[n]$ (n=0, ..., and K-1) may be multiplied by the sequence having the length of L of each symbol. Here, u represents an index of the masking sequence.

For example, as shown in FIG. 8A, the SEQ $s[0], s[1], ..., s[L-1]$ that is the sequence having the length of L may be arranged in one symbol 810 and $a_u[0]$ among the K sequence parts may be multiplied to each of $a_u[0], a_u[1], ..., a_u[K-1]$ in the corresponding symbol 810.

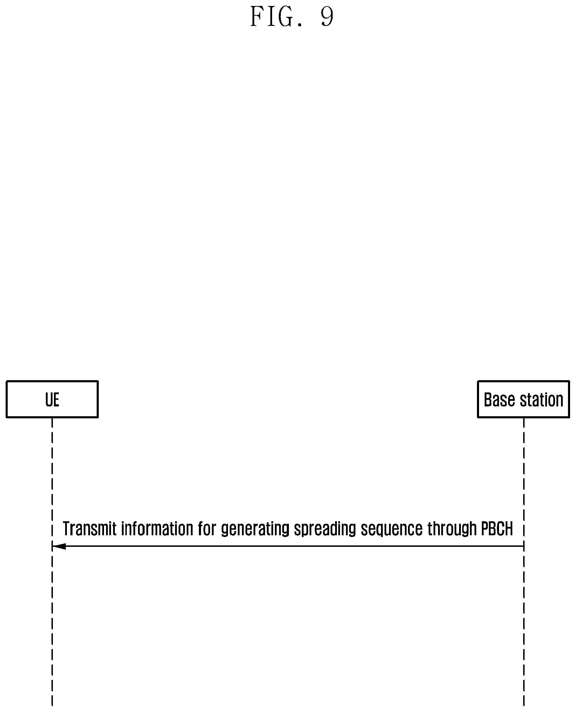

More specifically, referring to FIG. 8B, the UE of the embodiment may receive a synchronization signal from the base station (S810), and the UE may obtain sequence information in the corresponding cell based on the synchronization signal, and then generate a spreading sequence $s[0], s[1], ..., s[L-1]$ having a length of L by using the sequence information (S820). A method of obtaining sequence information in the disclosure will be described below with reference to FIG. 9 to FIG. 11.

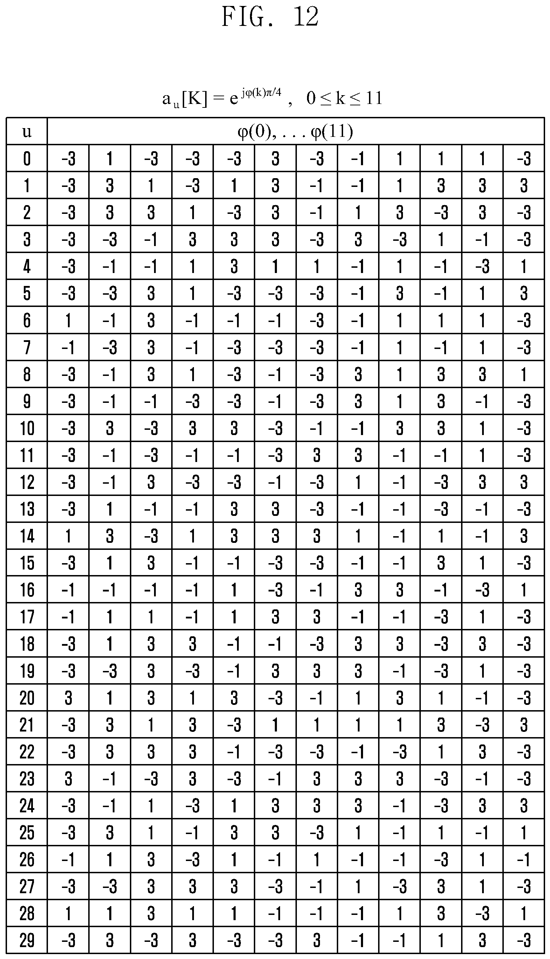

Furthermore, the UE according to an embodiment of the disclosure may repeatedly arrange the generated sequence having the length of L in each of K symbol positions and generate a masking sequence $a_u[0], a_u[1], ..., a_u[K-1]$ having a length of K (S830). Here, the UE may randomly select u, which is an index (or ID) of the masking sequence, from within a preconfigured specific finite set. A specific example of generating a masking sequence according to the disclosure will be described below with reference to FIG. 12.

The UE according to an embodiment of the disclosure may divide (split) the masking sequence having the length of K into K equal sequence parts corresponding to each of K symbols. Here, the divided K sequence parts may correspond to each of the K symbols. The UE according to an embodiment of the disclosure may generate the main signal part 802 by multiplying a sequence part corresponding to each symbol by a spreading sequence having a length of L arranged in the corresponding symbol (S840). Furthermore, a length of the CP 801 may be configured, for example, as a value greater than or equal to a maximum round-trip delay of a normal cell, and a signal obtained by copying a rear part of the main signal part 802 signal may be used.

Then, the PRACH preamble signal including the generated main signal part 802 and the CP 801 may be transmitted to the base station (S850).

For the spreading sequence generated by the UE, a sequence having a good cyclic correlation characteristic may be used to facilitate preamble detection and round-trip delay estimation in the base station. In addition, for the masking sequence generated by the UE, a sequence having a good cyclic correlation characteristic may be used so that the base station may easily distinguish the UE and estimate the round-trip delay.

FIG. 9 to FIG. 11 are diagrams for various embodiments in which a UE obtains sequence information for generating a spreading sequence according to an embodiment of the disclosure.

First, in an embodiment of the disclosure, for a spreading sequence having a length of L $s[0],s[1],...,s[L$-1], a Zadoff-Chu (ZC) sequence having a length of L may be used. Here, sequence information is required for the UE to generate the ZC sequence and in this case, the sequence information may be determined cell-specifically by a root index value and UEs within cell may share the same ZC sequence.

The UE may receive the sequence information (cell-specific root index) through a physical broadcast channel (PBCH) of a synchronization signal (unified by the term described above) transmitted by the base station as shown in FIG. 9.

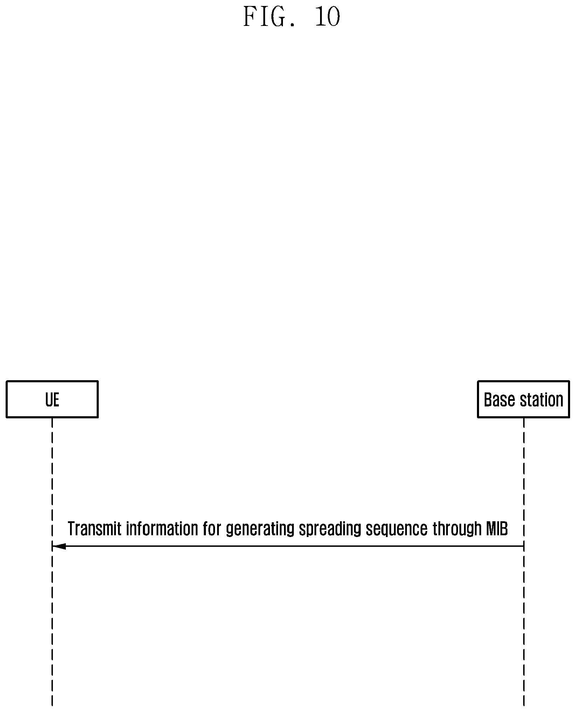

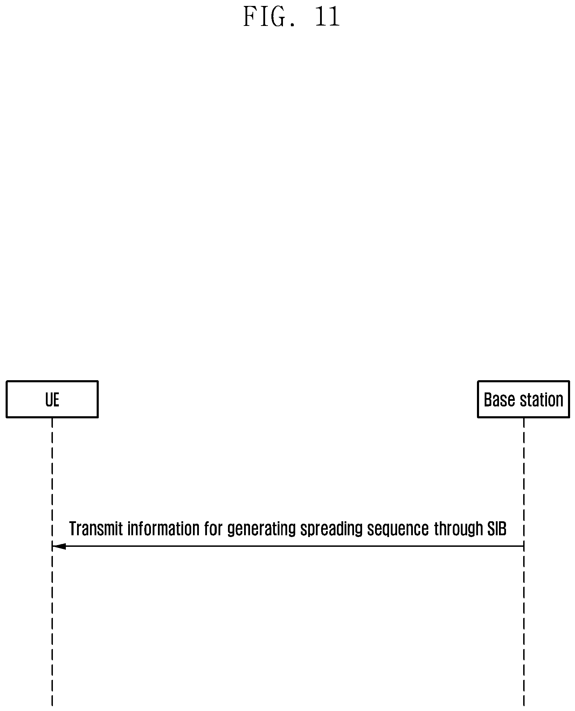

In another embodiment, the UE may receive sequence information (information on the root index) through a master information block (MIB) as shown in FIG. 10, or through a system information block (SIB) as shown in FIG. 11.

FIG. 12 is a diagram illustrating an example of a set of sequences that may be used as a masking sequence according to the disclosure.

The masking sequence $a_u[0]$, $a_u[1]$,..., $a_u[K$-1] having a length of K as described above may be determined based on the value of K. FIG. 12 is a table illustrating a masking sequence that may be used when, for example, K=12. Here, the UE may randomly select u, which is an index (or ID of the masking sequence) of the masking sequence, from among 0, 1,..., and 29, that is, 30 values to generate the masking sequence. A set of masking sequences may include sequences with good cyclic correlation characteristics. Here, the cyclic correlation characteristics may mean that a magnitude of cyclic autocorrelation of each sequence in the set has a relatively large value when a cyclic shift is 0 and a relatively small value when the cyclic shift is not 0, or a magnitude of cyclic cross-correlation between two different sequences in the set has a relatively small value regardless of the value of the cyclic shift.

In addition, the set of the generated masking sequences may be shared between the UE and the base station in advance, for example, as the base station provides a set of making sequences to the UE through signaling and accordingly, the base station may know from which masking sequence set the masking sequence randomly selected by the UE is selected.

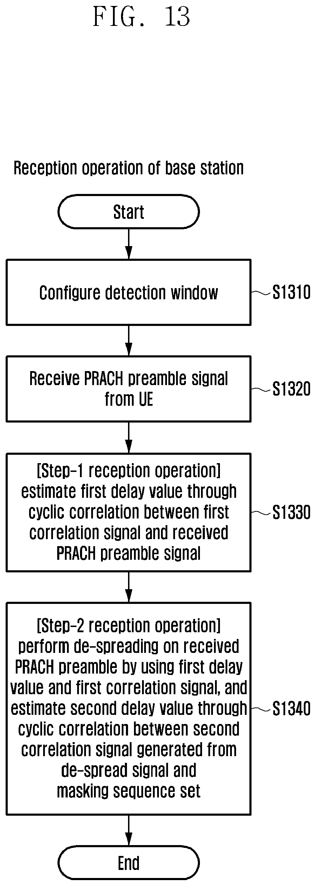

The base station may receive the PRACH preamble signal transmitted by the UE and estimate the round-trip delay of a signal between the base station and the UE and an ID u value of the masking sequence randomly selected by the UE. Here, the base station may use a sequential 2-step detection reception operation. A more detailed PRACH preamble detection operation of the base station will be described with reference to FIG. 13.

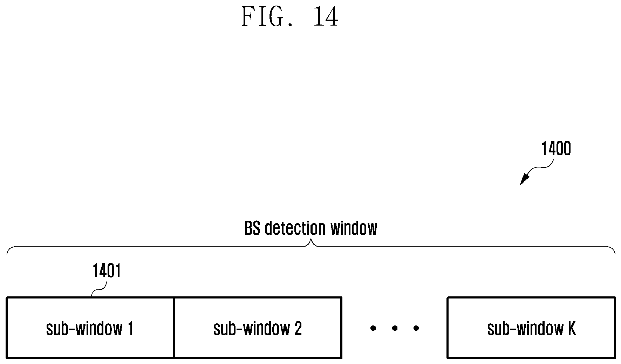

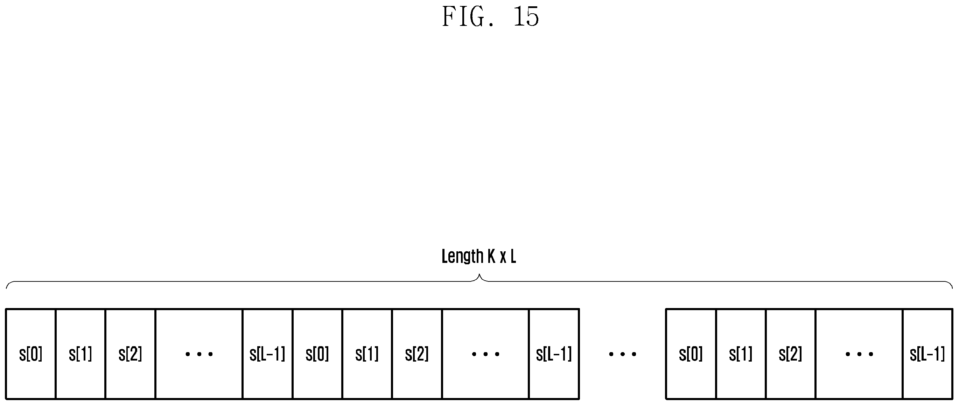

FIG. 13 is a flowchart illustrating a 2-step detection operation for a PRACH preamble of a base station according to an embodiment of the disclosure, FIG. 14 is a diagram illustrating a detection window for detecting a PRACH preamble signal according to an embodiment of the disclosure, and FIG. 15 is a diagram illustrating a correlation sequence used by a base station according to an embodiment of the disclosure.

Referring to FIG. 13, the base station may configure a detection window for detecting the PRACH preamble signal transmitted from the UE (S1310). Here, the detection window is a minimum section for detecting the PRACH preamble signal and a length thereof may be configured as a length of $K \times L$ as shown in FIG. 14, for example. Referring to FIG. 14, the detection window 1400 may include K subwindows 1401 having a length of L.

In addition, in order to receive the PRACH preamble signal, the base station may generate a first correlation signal (correlation sequence for step 1) having a length of $K \times L$ identical to a length of the main signal part of the PRACH preamble. In this case, the first correlation signal is, for example, as shown in FIG. 15, a signal generated by repeating a spreading sequence $s[0],s[1],...,s[L$-1] K times.

When receiving the PRACH preamble signal from the UE (S1320), the base station according to the disclosure may perform cyclic correlation between the signal received within a configured detection window and the generated first correlation signal, detect a peak value among result values of the cyclic correlation performed, and estimate whether the UE attempts random access and a delay value (first delay value) for a signal in a range within one symbol through a position in which the peak value is detected (S1330). Here, the cyclic correlation performed may be expressed by the following equation in the time-domain.

$$z[l] = \frac{1}{\sqrt{KL}} \sum_{n=0}^{KL-1} y[n]x^*[(n-l) \bmod KL]$$

In this case, $y[n]$ indicates a signal received within the detection window of the base station, $x[n]$ indicates the first correlation signal (i.e., $x[n] = s[n \bmod L]$, $n = 0,1, ...,KL$-1), and $z[l]$ indicates a result value of the cyclic correlation. The cyclic correlation may be performed in the frequency domain as shown in the following equation. Here, the position where the peak value is detected indicates the value of I at which a value of z[I] becomes a peak.

$$Z[k] = Y[k]X^*[k], k = 0,1, ..., KL - 1.$$

In this case, the value is

$$\{Y[k]\}_{k=0}^{KL-1} \triangleq \mathrm{DFT}\{y[l]\}_{l=0}^{KL-1}, \quad \{X[k]\}_{k=0}^{KL-1} \triangleq \mathrm{DFT}\{x[l]\}_{l=0}^{KL-1}.$$

Here, a DFT operation may be performed through IFFT of low complexity.
The base station may multiply the signal received within the detection window by the complex conjugate sequence element of the first correlation signal based on the first delay value estimated in Step 1 so as to perform de-spreading on the received signal. The base station according to an embodiment of the disclosure may estimate a final round-trip delay value of the PRACH preamble signal transmitted by the UE and an ID u of the masking sequence randomly selected by the UE by using the de-spread signal. Here, the base station may generate a second correlation signal (correlation sequence for step 2, $a[0],a[1],...,a[K$-1]) having a length of K from the received de-spread signal. Here, the second correlation signal may be generated using, for example, only one sample located at the same position in each sub-window included in the detection window, or may be generated by combining samples of each sub-window.
The base station according to the disclosure may perform cyclic correlation with the generated second correlation signal and the masking sequence for all index u in the masking sequence set selectable by the UE (here, the masking sequence may be shared between the UE and the base station in advance as described above), identify an index u (or ID u) of the masking sequence used by the UE through a correlator deriving a greatest peak value from among result values of cyclic correlation performed and a position of the peak value detected from the correlator, and estimate a final round-trip delay (second delay value) based on the identified masking sequence index u and the detected position of the peak value (S1340). Here, the cyclic correlation may be expressed by the following equation.

$$z_u[l] = \sum_{k=0}^{KL-1} a[k]a_u^*[(k-l) \bmod K], \quad l = 0,1, ..., K-1, \quad \forall u$$

As such, the UE may generate and transmit a PRACH preamble signal according to the first embodiment even in a system to which a shorter symbol length is applied, and the base station may accurately estimate the RTD between the UE and the base station through two-step detection so as to identify the UE and provide an appropriate timing command for UE connection. In particular, the embodiment is advantageous in that since the base station performs a detection operation by using a set of masking sequences which may have various u values in the detection operation and may be configured to have a short length, the complexity of detecting the PRACH preamble signal is reduced.

<Second embodiment>

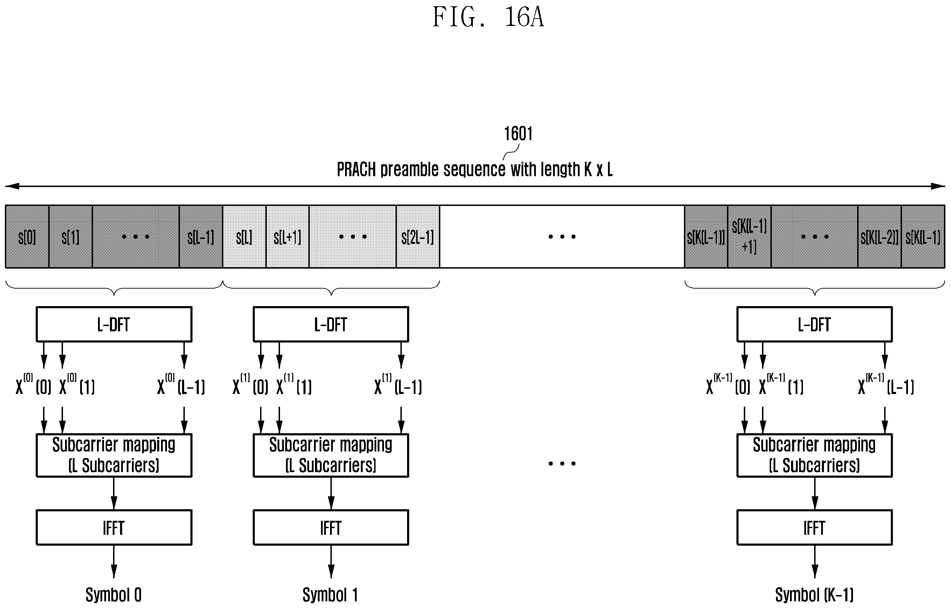

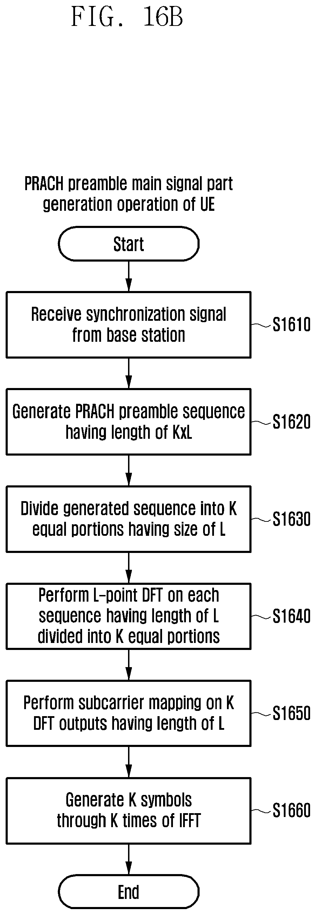

FIG. 16A is a diagram illustrating a method for generating a PRACH preamble signal according to a second embodiment of the disclosure, and FIG. 16B is a flowchart illustrating an operation of a UE generating a PRACH preamble signal according to a second embodiment of the disclosure.

Referring to FIG. 16A, the PRACH preamble signal 1601 according to the second embodiment of the disclosure may include a sequence having a length of $K \times L$.

Here, the UE may generate the PRACH preamble signal 1601 based on a sequence arbitrarily selected from among the U predetermined sequences.

More specifically, referring to FIG. 16B, when a synchronization signal is received from the base station (S 1610), the UE may perform downlink synchronization, and then generate the PRACH preamble signal 1601 having a length of $K \times L$ as shown in FIG. 16A for random access (S1620). In this case, the UE may randomly select one sequence from a set of U predetermined sequences and generate the PRACH preamble signal 1601 having a length of $K \times L$.

The UE according to an embodiment of the disclosure may divide the generated PRACH preamble signal 1601 into K sequences having a length of L in K equal portions (S1630), and then perform L-point discrete Fourier transform (DFT) on each sequence having a length of L divided into K equal portions (S1640). Thereafter, the UE may map outputs from the DFT to each subcarrier (S1650), and then use K symbols generated through K times of inverse fast Fourier transform (IFFT) to configure the main signal part of the PRACH preamble signal (S1660). Thereafter, the UE according to the disclosure transmits the generated PRACH preamble signal to the base station.

In the embodiment, the UE may generate a preamble sequence having a length of $K \times L$ based on a ZC sequence. In this case, the UE may generate the ZC sequence to have a length of a largest prime number less than or equal to $K \times L$ and then fill in a part deficient than $K \times L$ by duplicating a first part of the generated ZC sequence. Here, the UE may generate the ZC sequence by randomly selecting a root index of the generated ZC sequence from among the U predetermined root indices as described above.

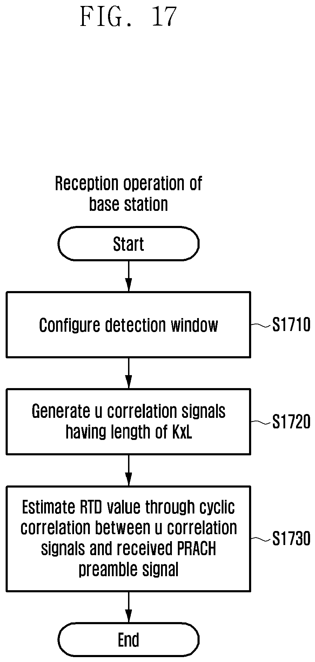

FIG. 17 is a flowchart illustrating an operation of a base station detecting a PRACH preamble signal generated according to a second embodiment of the disclosure.

Referring to FIG. 17, the base station according to an embodiment of the disclosure may configure a detection window having a length of $K \times L$ to receive the PRACH preamble signal transmitted by the UE (S1710). Here, the detection window may be configured, for example, as the detection window shown in FIG. 14.

The base station according to an embodiment of the disclosure may generate U correlation sequences having a length of $K \times L$ identical to the length of the main signal part of the PRACH preamble signal (S1720). A set including U correlation sequences may be identical to the set including U sequences randomly selected by the UE to generating the PRACH preamble signal.

Thereafter, the base station according to an embodiment of the disclosure may perform cyclic correlation between the the PRACH preamble signal received within the configured detection window and the U correlation signals, respectively, detect a peak value among result values of the performed cyclic correlation, and estimate whether the UE attempts random access and a round-trip delay value of the signal (S1730) through a location in which the peak value has been detected.

Here, U times of the cyclic correlation performed may be expressed by the following equation in the time-domain.

$$z[l] = \frac{1}{\sqrt{KL}} \sum_{n=0}^{KL-1} y[n]x_u^*[(n-l) \bmod KL], \qquad u = 0,1,\dots,U-1$$

In this case, $y[n]$ indicates a signal received within the detection window of the base station, $x[n]$ indicates the correlation signal having an index u, and $z[l]$ indicates a result value of the cyclic correlation. Here, the position where the peak value is detected indicates the value of l at which a value of z[l] becomes a peak. The cyclic correlation may be performed in the frequency domain as shown in the following equation.

$$Z[k] = Y[k]X_u^*[k], k = 0,1,\dots,KL-1.$$

In this case, the value is $\{Y[k]\}_{k=0}^{KL-1} \triangleq \mathrm{DFT}\{y[l]\}_{l=0}^{KL-1}$, $\{X_u[k]\}_{k=0}^{KL-1} \triangleq \mathrm{DFT}\{x_u[l]\}_{l=0}^{KL-1}$. Here, a DFT operation may be performed through IFFT of low complexity.

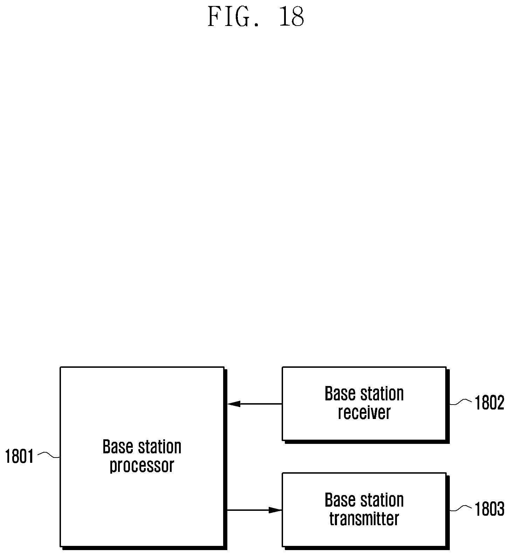

FIG. 18 a block diagram illustrating a structure of a base station according to an embodiment of the disclosure.

Referring to FIG. 18, the base station may include a base station receiver 1802, a base station transmitter 1803, and a base station processor 1801. The base station receiver 1802 and the base station transmitter 1803 may be referred to as a transceiver together. The base station receiver 1802, the base station transmitter 1803, and the base station processor 1801 may operate according to the above-described base station communication method. However, the components of the base station are not limited to the examples described above. For example, the base station may include more or fewer components (e.g., a memory or the like) than the above-described components. In addition, the base station receiver 1802, the base station transmitter 1803, and the base station processor 1801 may be implemented in a form of a single chip.

The base station receiver 1802 and the base station transmitter 1803 (or the transceiver) may transmit or receive signals to or from the UE. Here, the signal may include control information and data. To this end, the transceiver may include an RF transmitter configured to up-convert and amplify the frequency of the transmitted signal, an RF receiver configured to amplify the received signal with low noise and down-convert the frequency, and the like. However, this is only an embodiment of the transceiver, and the components of the transceiver are not limited to the RF transmitter and the RF receiver.

In addition, the transceiver may receive a signal through a wireless channel, output the signal to the base station processor 1801, and transmit a signal output from the based station processor 1801 through the wireless channel.

The memory (not shown) may store programs and data necessary for the operation of the base station. In addition, the memory may store control information or data included in signals obtained by the base station. The memory may include a storage medium such as a ROM, a RAM, a hard disk, a CD-ROM, and a DVD, or a combination of storage media.

The base station processor 1801 may control a series of processes so that the base station operates according to an embodiment of the disclosure. The base station processor 1801 may be implemented as a controller or one or more processors.

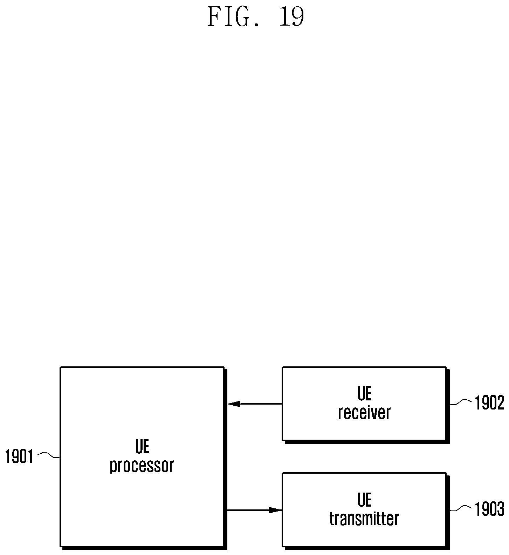

FIG. 19 a block diagram illustrating a structure of a UE according to an embodiment of the disclosure.

Referring to FIG. 19, the UE may include a UE receiver 1902, a UE transmitter 1903, and a UE processor 1901. The UE receiver 1902 and the UE transmitter 1903 may be referred to as a transceiver together. The UE receiver 1902, the UE transmitter 1903, and the UE processor 18901 may operate according to the above-described UE communication method. However, the components of the UE are not limited to the examples described above. For example, the UE may include more or fewer components (e.g., a memory or the like) than the above-described components. In addition, the UE receiver 1902, the UE transmitter 1903, and the UE processor 1901 may be implemented in a form of a single chip.

The UE receiver 1902 and the UE transmitter 1903 (or the transceiver) may transmit or receive signals to or from the base station. Here, the signal may include control information and data. To this end, the transceiver may include an RF transmitter configured to up-convert and amplify the frequency of the transmitted signal, an RF receiver configured to amplify the received signal with low noise and down-convert the frequency, and the like. However, this is only an embodiment of the transceiver, and the components of the transceiver are not limited to the RF transmitter and the RF receiver.

In addition, the transceiver may receive a signal through a wireless channel, output the signal to the UE processor 1901, and transmit a signal output from the UE processor 1901 through the wireless channel.

The memory (not shown) may store programs and data necessary for the operation of the UE. In addition, the memory may store control information or data included in signals obtained by the UE. The memory may include a storage medium such as a ROM, a RAM, a hard disk, a CD-ROM, and a DVD, or a combination of storage media.

The UE processor 1901 may control a series of processes so that the UE operates according to an embodiment of the disclosure. The UE processor 1901 may be implemented as a controller or one or more processors.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments, but should be defined by the appended claims and equivalents thereof.

**Claims**

1. A method performed by a user equipment (UE) in a wireless communication system, the method comprising:

     generating a preamble signal;
     transmitting, to a base station, the generated preamble signal; and
     receiving, from the base station, a random access response for a transmission of the preamble signal,
     wherein the preamble signal is generated based on a preconfigured number of first sequences and parts of a second sequence divided into the preconfigured number of equal portions.

**2.** The method of claim 1,

wherein the first sequences are arranged in each of the preconfigured number of symbols included in the preamble signal,

wherein each part of the second sequence divided into the preconfigured number of equal portions is mapped to a corresponding symbol among the preconfigured number of symbols, and

wherein the preamble signal is generated based on multiplication of a first sequence and a part of the second sequence corresponding to a symbol in which the first sequence is arranged.

**3.** The method of claim 1, further comprising:

receiving, from the base station, information on a root index value of a first sequence;

selecting the first sequence from a set of the first sequence generated based on the root index value;

determining a set of the second sequence based on the preconfigured number; and

selecting the second sequence from the set of the second sequence.

**4.** The method of claim 1, further comprising:

transmitting, to the base station, a message for random access, based on timing advance information included in the random access response,

wherein the timing advance information is determined based on a round-trip delay (RTD) between the UE and the base station,

wherein the RTD is determined based on a first correlation signal based on the first sequences, a delay value determined based on the first correlation signal, and cyclic correlation performed between a second correlation signal generated by the preamble signal and all sequence signals included in a set of the second sequence, and

wherein the second correlation signal has a length identical to a length of the second sequence.

**5.** A method performed by a base station in a wireless communication system, the method comprising:

receiving, from a user equipment (UE), a preamble signal;

generating a random access response for a reception of the preamble signal; and

transmitting, to the UE, the random access response,

wherein the preamble signal is generated based on a preconfigured number of first sequences and parts of a second sequence divided into the preconfigured number of equal portions.

**6.** The method of claim 5,

wherein the first sequences are arranged in each of the preconfigured number of symbols included in the preamble signal,

wherein each of the second sequence divided into the preconfigured number of equal portions is mapped to a corresponding symbol among the preconfigured number of symbols, and

wherein the preamble signal is generated based on multiplication of the first sequences and a part of the second sequence corresponding to a symbol in which the first sequences are arranged.

**7.** The method of claim 5, further comprising:

transmitting, to the UE, information on a root index value of a first sequence,

wherein a set of the first sequence for selecting the first sequence is generated based on the root index value, and

wherein a set of the second sequence for selecting the second sequence is generated based on the preconfigured number.

**8.** The method of claim 5,

wherein the generating of the random access response further comprises: determining a round-trip delay (RTD) between the UE and the base station based on the detection of the preamble signal; and generating timing advance information included in the random access response based on the determined RTD,

wherein the determining of the RTD further comprises: identifying a delay value of the received preamble signal by using a first correlation signal based on the first sequences; performing cyclic correlation between a second correlation signal and all sequence signals included in a set of the second sequences, the second correlation signal being generated based on the delay value and the received preamble signal; and determining the RTD based on a result of the cyclic correlation, and

wherein the second correlation signal has a length identical to a length of the second sequence.

9. A user equipment (UE) in a wireless communication system, the UE comprising:

a transceiver; and
a controller configured to:

generate a preamble signal,
control the transceiver to transmit, to a base station, the generated preamble signal, and
control the transceiver to receive, from the base station, a random access response for a transmission of the preamble signal,

wherein the preamble signal is generated based on a preconfigured number of first sequences and parts of a second sequence divided into the preconfigured number of equal portions.

10. The UE of claim 9, wherein the controller is further configured to:

arrange the first sequences in each of the preconfigured number of symbols included in the preamble signal;
map each part of the second sequence divided into the preconfigured number of equal portions to a corresponding symbol among the preconfigured number of symbols; and
generate the preamble signal by performing multiplication of a first sequence and a part of the second sequence corresponding to a symbol in which the first sequence is arranged.

11. The UE of claim 9, wherein the controller is further configured to:

control the transceiver to receive, from the base station, information on a root index value of the first sequences;
select the first sequence from a set of the first sequence generated based on the root index value;
determine a set of the second sequence based on the preconfigured number; and
select the second sequence from the set of second sequences.

12. The UE of claim 9,

wherein the controller is further configured to control the transceiver to transmit, to the base station, a message for random access, based on timing advance information included in the random access response,
wherein the timing advance information is determined based on a round-trip delay (RTD) between the UE and the base station,
wherein the RTD is determined based on a first correlation signal based on the first sequences, a delay value determined based on the first correlation signal, and cyclic correlation performed between a second correlation signal generated by the preamble signal and all sequence signals included in a set of the second sequence, and
wherein the second correlation signal has a length identical to a length of the second sequence.

13. A base station in a wireless communication system, the base station comprising:

a transceiver; and
a controller configured to:

control the transceiver to receive, from a UE, a preamble signal,
generate a random access response for a reception of the preamble signal, and
control the transceiver to transmit, to the UE, the random access response,

wherein the preamble signal is generated based on a preconfigured number of first sequence and parts of a second sequence divided into the preconfigured number of equal portions.

14. The base station of claim 13,

wherein the first sequences are arranged in each of the preconfigured number of symbols included in the preamble signal,

wherein each of the second sequence divided into the preconfigured number of equal portions is mapped to a corresponding symbol among the preconfigured number of symbols,

wherein the preamble signal is generated based on multiplication of the first sequences and a part of the second sequence corresponding to a symbol in which the first sequences are arranged,

wherein the controller is further configured to control the transceiver to transmit, to the UE, information on a root index value of a first sequence,

wherein a set of first sequences for selecting the first sequences is generated based on the root index value, and

wherein a set of second sequences for selecting the second sequence is generated based on the preconfigured number.

15. The base station of claim 13,
    wherein the controller is further configured to:

    identify a delay value of the received preamble signal by using a first correlation signal based on the first sequences; perform cyclic correlation between a second correlation signal and all sequence signals included in a set of the second sequences, the second correlation signal being generated based on the delay value and the received preamble signal and determine the RTD based on a result of the cyclic correlation; and generate timing advance information included in the random access response based on the determined RTD, and
    wherein the second correlation signal has a length identical to a length of the second sequence.

# FIG. 1

Radio frame (104)

Subframe (103)

Slot (102)

$N_{SC}^{BW}$ subcarriers (105)

$N_{SC}^{RB}$ subcarriers (108)

Resource element (106)

Resource block (107)

frequency

$N_{symb}$ OFDM symbols (101)

time

# FIG. 2

# FIG. 3

1 symbol
(301)

12 subcarriers (302)

DMRS
(305)

CCE
(304)

REG
(303)

# FIG. 4

Control resource set duration
[404]

Subband [403]

System bandwidth [410]

Slot [420]

Frequency

Time

control resource set#1 [401]

control resource set#2 [402]

# FIG. 5

1 subcarrier
with subcarrier
spacing $\triangle f$

1 RB
= 12 subcarriers

1 Slot (or Subframe)
= 14 OFDM symbols

PDCCH REs (501)

DMRS REs (502)

PDSCH REs (503)

# FIG. 6

600

602

601

| Cyclic prefix (CP) | Symbol 1 | Symbol 2 | $\cdots$ | Symbol K |
|---|---|---|---|---|

Length-L sequence

603

# FIG. 7A

Base station operation

```
        ( Start )
           │
           ▼
┌─────────────────────────────┐
│ Transmit synchronization signal │ ─── S701
└─────────────────────────────┘
           │
           ▼
┌─────────────────────────────┐
│    Receive PRACH preamble     │ ─── S702
│        signal from UE         │
└─────────────────────────────┘
           │
           ▼
┌─────────────────────────────┐
│  Estimate signal round-trip delay │
│  between base station and UE,   │ ─── S703
│      preamble ID detection       │
│         generated by UE          │
└─────────────────────────────┘
           │
           ▼
┌─────────────────────────────┐
│    Transmit random access     │ ─── S704
│        response to UE         │
└─────────────────────────────┘
           │
           ▼
        ( End )
```

# FIG. 7B

UE operation

```
        ┌──────────────┐
        │    Start     │
        └──────┬───────┘
               │
               ▼
   ┌───────────────────────┐
   │ Receive synchronization signal │  ~S710
   │    from base station  │
   └───────────┬───────────┘
               │
               ▼
   ┌───────────────────────┐
   │ Transmit PRACH preamble to │  ~S720
   │       base station    │
   └───────────┬───────────┘
               │
               ▼
   ┌───────────────────────┐
   │ Receive random access response │  ~S730
   │    from base station  │
   └───────────┬───────────┘
               │
               ▼
        ┌──────────────┐
        │     END      │
        └──────────────┘
```

# FIG. 8A

EP 4 258 798 A1

# FIG. 8B

PRACH preamble main signal part generation
operation of UE

```
                    ┌──────────────┐
                    │    Start     │
                    └──────┬───────┘
                           │
         ┌─────────────────▼─────────────────┐
         │   Receive synchronization signal  │────S810
         │        from base station          │
         └─────────────────┬─────────────────┘
                           │
         ┌─────────────────▼─────────────────┐
         │     Generate spreading sequence   │────S820
         │          having length of L       │
         └─────────────────┬─────────────────┘
                           │
         ┌─────────────────▼─────────────────┐
         │      Generate masking sequence    │────S830
         │          having length of K       │
         └─────────────────┬─────────────────┘
                           │
         ┌─────────────────▼─────────────────┐
         │   Generate a main signal part by  │
         │  multiplying each of the sequence │
         │  parts divided into K equal portions │──S840
         │   from masking sequence by        │
         │   spreading sequence arranged in  │
         │        corresponding symbol       │
         └─────────────────┬─────────────────┘
                           │
         ┌─────────────────▼─────────────────┐
         │     Transmit PRACH preamble to    │────S850
         │            base station           │
         └─────────────────┬─────────────────┘
                           │
                    ┌──────▼───────┐
                    │     End      │
                    └──────────────┘
```

FIG. 9

```
┌──────┐                                                              ┌──────────────┐
│  UE  │                                                              │ Base station │
└──────┘                                                              └──────────────┘
    ┊                                                                         ┊
    ┊                                                                         ┊
    ┊                                                                         ┊
    ┊   Transmit information for generating spreading sequence through PBCH   ┊
    ◄─────────────────────────────────────────────────────────────────────────
    ┊                                                                         ┊
    ┊                                                                         ┊
    ┊                                                                         ┊
    ┊                                                                         ┊
    ┊                                                                         ┊
    ┊                                                                         ┊
```

FIG. 10

```
┌──────┐                                                              ┌──────────────┐
│  UE  │                                                              │ Base station │
└──────┘                                                              └──────────────┘
    ┆                                                                          ┆
    ┆                                                                          ┆
    ┆                                                                          ┆
    ┆     Transmit information for generating spreading sequence through MIB   ┆
    ◄──────────────────────────────────────────────────────────────────────────
    ┆                                                                          ┆
    ┆                                                                          ┆
    ┆                                                                          ┆
    ┆                                                                          ┆
    ┆                                                                          ┆
    ┆                                                                          ┆
```

FIG. 11

| UE | | Base station |

Transmit information for generating spreading sequence through SIB

# FIG. 12

$$a_u[K] = e^{j\varphi(k)\pi/4}, \quad 0 \leq k \leq 11$$

| u | φ(0), . . . φ(11) | | | | | | | | | | | |
|---|----|----|----|----|----|----|----|----|----|----|----|----|
| 0 | -3 | 1 | -3 | -3 | -3 | 3 | -3 | -1 | 1 | 1 | 1 | -3 |
| 1 | -3 | 3 | 1 | -3 | 1 | 3 | -1 | -1 | 1 | 3 | 3 | 3 |
| 2 | -3 | 3 | 3 | 1 | -3 | 3 | -1 | 1 | 3 | -3 | 3 | -3 |
| 3 | -3 | -3 | -1 | 3 | 3 | 3 | -3 | 3 | -3 | 1 | -1 | -3 |
| 4 | -3 | -1 | -1 | 1 | 3 | 1 | 1 | -1 | 1 | -1 | -3 | 1 |
| 5 | -3 | -3 | 3 | 1 | -3 | -3 | -3 | -1 | 3 | -1 | 1 | 3 |
| 6 | 1 | -1 | 3 | -1 | -1 | -1 | -3 | -1 | 1 | 1 | 1 | -3 |
| 7 | -1 | -3 | 3 | -1 | -3 | -3 | -3 | -1 | 1 | -1 | 1 | -3 |
| 8 | -3 | -1 | 3 | 1 | -3 | -1 | -3 | 3 | 1 | 3 | 3 | 1 |
| 9 | -3 | -1 | -1 | -3 | -3 | -1 | -3 | 3 | 1 | 3 | -1 | -3 |
| 10 | -3 | 3 | -3 | 3 | 3 | -3 | -1 | -1 | 3 | 3 | 1 | -3 |
| 11 | -3 | -1 | -3 | -1 | -1 | -3 | 3 | 3 | -1 | -1 | 1 | -3 |
| 12 | -3 | -1 | 3 | -3 | -3 | -1 | -3 | 1 | -1 | -3 | 3 | 3 |
| 13 | -3 | 1 | -1 | -1 | 3 | 3 | -3 | -1 | -1 | -3 | -1 | -3 |
| 14 | 1 | 3 | -3 | 1 | 3 | 3 | 3 | 1 | -1 | 1 | -1 | 3 |
| 15 | -3 | 1 | 3 | -1 | -1 | -3 | -3 | -1 | -1 | 3 | 1 | -3 |
| 16 | -1 | -1 | -1 | -1 | 1 | -3 | -1 | 3 | 3 | -1 | -3 | 1 |
| 17 | -1 | 1 | 1 | -1 | 1 | 3 | 3 | -1 | -1 | -3 | 1 | -3 |
| 18 | -3 | 1 | 3 | 3 | -1 | -1 | -3 | 3 | 3 | -3 | 3 | -3 |
| 19 | -3 | -3 | 3 | -3 | -1 | 3 | 3 | 3 | -1 | -3 | 1 | -3 |
| 20 | 3 | 1 | 3 | 1 | 3 | -3 | -1 | 1 | 3 | 1 | -1 | -3 |
| 21 | -3 | 3 | 1 | 3 | -3 | 1 | 1 | 1 | 1 | 3 | -3 | 3 |
| 22 | -3 | 3 | 3 | 3 | -1 | -3 | -3 | -1 | -3 | 1 | 3 | -3 |
| 23 | 3 | -1 | -3 | 3 | -3 | -1 | 3 | 3 | 3 | -3 | -1 | -3 |
| 24 | -3 | -1 | 1 | -3 | 1 | 3 | 3 | 3 | -1 | -3 | 3 | 3 |
| 25 | -3 | 3 | 1 | -1 | 3 | 3 | -3 | 1 | -1 | 1 | -1 | 1 |
| 26 | -1 | 1 | 3 | -3 | 1 | -1 | 1 | -1 | -1 | -3 | 1 | -1 |
| 27 | -3 | -3 | 3 | 3 | 3 | -3 | -1 | 1 | -3 | 3 | 1 | -3 |
| 28 | 1 | 1 | 3 | 1 | 1 | -1 | -1 | -1 | 1 | 3 | -3 | 1 |
| 29 | -3 | 3 | -3 | 3 | -3 | -3 | 3 | -1 | -1 | 1 | 3 | -3 |

# FIG. 13

Reception operation of base station

```
        ┌─────────────┐
        │    Start    │
        └──────┬──────┘
               │
               ▼
   ┌───────────────────────┐
   │ Configure detection window │──── S1310
   └───────────┬───────────┘
               │
               ▼
   ┌───────────────────────┐
   │ Receive PRACH preamble signal │──── S1320
   │          from UE          │
   └───────────┬───────────┘
               │
               ▼
   ┌───────────────────────┐
   │ [Step-1 reception operation] │
   │ estimate first delay value through │
   │ cyclic correlation between first │──── S1330
   │ correlation signal and received │
   │    PRACH preamble signal    │
   └───────────┬───────────┘
               │
               ▼
   ┌───────────────────────┐
   │ [Step-2 reception operation] │
   │ perform de-spreading on received │
   │ PRACH preamble by using first delay │
   │ value and first correlation signal, and │
   │ estimate second delay value through │──── S1340
   │ cyclic correlation between second │
   │ correlation signal generated from │
   │    de-spread signal and    │
   │     masking sequence set     │
   └───────────┬───────────┘
               │
               ▼
        ┌─────────────┐
        │     End     │
        └─────────────┘
```

FIG. 14

1400

BS detection window

1401

| sub-window 1 | sub-window 2 | • • • | sub-window K |

FIG. 15

Length K x L

| s[0] | s[1] | s[2] | · · · | s[L-1] | s[0] | s[1] | s[2] | · · · | s[L-1] | · · · | s[0] | s[1] | s[2] | · · · | s[L-1] |

# FIG. 16A

1601

PRACH preamble sequence with length K x L

| s[0] | s[1] | ・・・ | s[L-1] | s[L] | s[L+1] | ・・・ | s[2L-1] | ・・・ | s[K(L-1)] | s[K(L-1)+1] | ・・・ | s[K(L-2)] | s[K(L-1)] |

L-DFT

$X^{[0]}(0)$ $X^{[0]}(1)$ $X^{[0]}(L-1)$

Subcarrier mapping (L Subcarriers)

IFFT

Symbol 0

L-DFT

$X^{[1]}(0)$ $X^{[1]}(1)$ $X^{[1]}(L-1)$

Subcarrier mapping (L Subcarriers)

IFFT

Symbol 1

・・・

L-DFT

$X^{[K-1]}(0)$ $X^{[K-1]}(1)$ $X^{[K-1]}(L-1)$

Subcarrier mapping (L Subcarriers)

IFFT

Symbol (K-1)

EP 4 258 798 A1

# FIG. 16B

PRACH preamble main signal part
generation operation of UE

```
        ╭─────────────╮
        │    Start     │
        ╰──────┬──────╯
               │
               ▼
  ┌────────────────────────┐
  │  Receive synchronization signal  │ ～S1610
  │    from base station    │
  └────────────┬───────────┘
               │
               ▼
  ┌────────────────────────┐
  │ Generate PRACH preamble sequence │ ～S1620
  │     having length of KxL    │
  └────────────┬───────────┘
               │
               ▼
  ┌────────────────────────┐
  │  Divide generated sequence into K │ ～S1630
  │  equal portions having size of L  │
  └────────────┬───────────┘
               │
               ▼
  ┌────────────────────────┐
  │   Perform L-point DFT on each   │
  │   sequence having length of L   │ ～S1640
  │   divided into K equal portions  │
  └────────────┬───────────┘
               │
               ▼
  ┌────────────────────────┐
  │  Perform subcarrier mapping on K  │ ～S1650
  │   DFT outputs having length of L  │
  └────────────┬───────────┘
               │
               ▼
  ┌────────────────────────┐
  │      Generate K symbols      │ ～S1660
  │    through K times of IFFT    │
  └────────────┬───────────┘
               │
               ▼
        ╭─────────────╮
        │     End      │
        ╰─────────────╯
```

# FIG. 17

Reception operation of
base station

```
        ( Start )
           |
           v
+-------------------------+
| Configure detection window |——S1710
+-------------------------+
           |
           v
+-------------------------+
|  Generate u correlation signals  |——S1720
|     having length of KxL      |
+-------------------------+
           |
           v
+-------------------------+
| Estimate RTD value through cyclic |
| correlation between u correlation |——S1730
| signals and received PRACH     |
|        preamble signal        |
+-------------------------+
           |
           v
        ( End )
```

FIG. 18

1801 — Base station processor

Base station receiver — 1802

Base station transmitter — 1803

FIG. 19

## INTERNATIONAL SEARCH REPORT

| International application No. |
| --- |
| **PCT/KR2021/019733** |

**A.  CLASSIFICATION OF SUBJECT MATTER**

**H04W 74/08**(2009.01)i; **H04W 74/00**(2009.01)i; **H04L 27/26**(2006.01)i; **H04W 56/00**(2009.01)i

According to International Patent Classification (IPC) or to both national classification and IPC

**B.  FIELDS SEARCHED**

Minimum documentation searched (classification system followed by classification symbols)

H04W 74/08(2009.01); H04L 1/16(2006.01); H04L 27/28(2006.01); H04L 5/02(2006.01); H04W 16/12(2009.01); H04W 28/18(2009.01); H04W 48/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 액세스(random access), 프리앰블(preamble), 마스킹 시퀀스(masking sequence), 확산 시퀀스(spreading sequence), 6G

**C.  DOCUMENTS CONSIDERED TO BE RELEVANT**

| Category* | Citation of document, with indication, where appropriate, of the relevant passages | Relevant to claim No. |
| --- | --- | --- |
| Y | KR 10-2021-0001346 A (SAMSUNG ELECTRONICS CO., LTD.) 06 January 2021 (2021-01-06)<br>See paragraphs [0007], [0072], [0076] and [0081]. | 1-15 |
| Y | US 2011-0305287 A1 (KWON, Yeong Hyeon et al.) 15 December 2011 (2011-12-15)<br>See paragraphs [0082], [0090] and [0092]. | 1-15 |
| Y | US 2019-0158260 A1 (LG ELECTRONICS INC.) 23 May 2019 (2019-05-23)<br>See paragraphs [0140]-[0141] and [0175]. | 2-3,6-7,10-11,14 |
| Y | KR 10-2018-0053205 A (SAMSUNG ELECTRONICS CO., LTD.) 21 May 2018 (2018-05-21)<br>See paragraphs [0100] and [0111]. | 4,8,12,15 |
| A | KR 10-2010-0079555 A (LG ELECTRONICS INC.) 08 July 2010 (2010-07-08)<br>See paragraphs [0060]-[0064]; and figure 7. | 1-15 |

☐ Further documents are listed in the continuation of Box C.          ☑ See patent family annex.

| *    Special categories of cited documents: | |
| --- | --- |
| "A"   document defining the general state of the art which is not considered to be of particular relevance | "T"   later document published after the international filing date or priority date and not in conflict with the application but cited to understand the principle or theory underlying the invention |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **21 March 2022** | **29 March 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/019733**

| Patent document cited in search report | | | Publication date (day/month/year) | Patent family member(s) | | | Publication date (day/month/year) |
|---|---|---|---|---|---|---|---|
| KR | 10-2021-0001346 | A | 06 January 2021 | WO | 2020-263053 | A1 | 30 December 2020 |
| US | 2011-0305287 | A1 | 15 December 2011 | US | 8861624 | B2 | 14 October 2014 |
| | | | | WO | 2010-082735 | A2 | 22 July 2010 |
| US | 2019-0158260 | A1 | 23 May 2019 | KR | 10-1295386 | B1 | 08 August 2013 |
| | | | | KR | 10-1306716 | B1 | 11 September 2013 |
| | | | | KR | 10-1328952 | B1 | 13 November 2013 |
| | | | | KR | 10-1356533 | B1 | 03 February 2014 |
| | | | | KR | 10-2008-0093355 | A | 21 October 2008 |
| | | | | KR | 10-2013-0052583 | A | 22 May 2013 |
| | | | | US | 10250373 | B2 | 02 April 2019 |
| | | | | US | 10715299 | B2 | 14 July 2020 |
| | | | | US | 2010-0034165 | A1 | 11 February 2010 |
| | | | | US | 2013-0003675 | A1 | 03 January 2013 |
| | | | | US | 2015-0092742 | A1 | 02 April 2015 |
| | | | | US | 2017-0093551 | A1 | 30 March 2017 |
| | | | | US | 8228782 | B2 | 24 July 2012 |
| | | | | US | 8929194 | B2 | 06 January 2015 |
| | | | | US | 9538508 | B2 | 03 January 2017 |
| | | | | WO | 2008-078919 | A2 | 03 July 2008 |
| KR | 10-2018-0053205 | A | 21 May 2018 | EP | 3522622 | A1 | 07 August 2019 |
| | | | | US | 11109330 | B2 | 31 August 2021 |
| | | | | US | 2019-0281564 | A1 | 12 September 2019 |
| | | | | WO | 2018-088640 | A1 | 17 May 2018 |
| KR | 10-2010-0079555 | A | 08 July 2010 | US | 2011-0211488 | A1 | 01 September 2011 |
| | | | | US | 8654745 | B2 | 18 February 2014 |
| | | | | WO | 2010-050712 | A2 | 06 May 2010 |

Form PCT/ISA/210 (patent family annex) (July 2019)